# EUROPEAN PATENT APPLICATION

(11) **EP 3 730 457 A1**
(43) Date of publication of application: **28.10.2020**
(21) Application number: 19170772.8
(22) Date of filing: 24.04.2019
(51) Int. Cl.: C01C 1/04, C01B 3/02, C01B 3/38, C01B 3/48, C01B 3/58

(54) **USE OF RENEWABLE ENERGY IN AMMONIA SYNTHESIS**

(71) Applicant: SABIC Global Technologies B.V., 4612 PX Bergen op Zoom (NL)
(72) Inventor: WARD, Andrew Mark, 6160 GA Geleen (NL); STEVENSON, Scott, 6160 GA Geleen (NL); OPRINS, Arno, Johannes, Maria, 6160 GA Geleen (NL); ZHAO, Zhun, 6160 GA Geleen (NL); ABBOTT, Tim, 6160 GA Geleen (NL); LAWSON, Kenneth, Francis, 6160 GA Geleen (NL); SCHROER, Joseph, Wiliam, 6160 GA Geleen (NL); HUCKMAN, Michael, Edward, 6160 GA Geleen (NL)
(74) Representative: Sabic Intellectual Property Group

(57) **Abstract**

A method of producing ammonia, the method comprising: (a) reacting (e.g., via processes such as steam reforming, partial oxidation and of gasification), a carbon containing material such as natural gas, methane, propane, butane, LPG, naphtha, coal or petroleum coke to produce a synthesis gas comprising carbon monoxide and hydrogen; (b) shifting the synthesis gas to produce a shifted product comprising increased amount of hydrogen; (c) purifying the shifted product to produce a purified gas comprising a smaller amount of non-hydrogen components; and (d) synthesizing ammonia from the purified gas and optionally additional nitrogen to provide an ammonia product, wherein a majority or greater than or equal to about 40, 50, 60, 70, 80, or 90% of the net energy needed in (a), (b), (c), (d), or a combination thereof is provided by a non-carbon based energy source, a renewable energy source, electricity, or a combination thereof.

## Description

### TECHNICAL FIELD

The present disclosure relates to the use of renewable energy in ammonia synthesis; more particularly, the present disclosure relates to the electrification of an ammonia synthesis plant; still more particularly, the present disclosure relates to a reduction in environmental emissions, such as carbon dioxide, by reducing the combustion of hydrocarbons (e.g., natural gas/fossil fuels) for fuel in an ammonia synthesis plant.

### BACKGROUND

Chemical synthesis plants are utilized to provide a variety of chemicals. Often, a dedicated fuel is burned or 'combusted' to provide heat of reaction for chemical synthesis, energy to heat one or more process streams, energy to vaporize liquids (e.g., boil water used as a diluent), energy to do work (e.g., drive a compressor or pump), or energy for other process operations throughout the chemical synthesis plant. Such burning or combustion of fuels results in the production of flue gases, which can be harmful to the environment, and also results in a loss of energy efficiency of the process. Likewise, steam is often conventionally utilized as a plant-wide heat and/or energy transfer fluid within chemical synthesis plants. The steam utilized for the heat and/or energy transfer is often produced via the combustion of a fuel, resulting in the production of additional flue gas and further energy efficiency losses during the chemical synthesis. Additionally, the use of a material that could otherwise be utilized as a reactant for combustion as a fuel also reduces an amount of the desired chemical product produced in the chemical synthesis plant from a given amount of the material. Accordingly, a need exists for enhanced systems and methods of chemical synthesis whereby an amount of fuels, especially fossil fuels, burned to provide energy is reduced or eliminated. Desirably, such systems and methods also provide for an increase in energy efficiency and/or a decrease in emissions, such as emissions of greenhouse gases (GHG), by the chemical synthesis plant.

### SUMMARY

Herein disclosed is a method of producing ammonia, the method comprising: (a) introducing a feed comprising a carbon containing material selected from natural gas, methane, propane, butane, LPG, naphtha, coal, petroleum coke, or combinations thereof to a synthesis gas generation section such as steam reforming or partial oxidation to produce a synthesis gas product comprising hydrogen and carbon monoxide, where the energy required for the synthesis gas generation section is supplied by a heat input Q1; (b) cooling the reformer product to produce a cooled synthesis gas by effecting a heat removal Q2; (c) shifting the cooled synthesis gas to produce a shifted synthesis gas product; (d) cooling the shifted synthesis gas by effecting a heat removal Q3 to produce a cooled, shifted synthesis gas; (e) purifying the cooled, shifted synthesis gas by: removing carbon dioxide from the cooled, shifted synthesis gas; heating by a heat input Q4 to produce a heated carbon-dioxide reduced gas; methanating the heated carbon-dioxide reduced gas to produce a methanator product; and cooling and condensing water from the methanator product by a heat removal Q5 to provide a purified gas; (f) compressing the purified gas; (g) heating the compressed, purified gas by a heat input Q6 to provide a heated gas; (h) providing an ammonia synthesis feed comprising the heated gas, wherein the ammonia synthesis feed comprises hydrogen and nitrogen, wherein the nitrogen is present in the synthesis gas or subsequently added thereto; (i) producing a product comprising ammonia from the ammonia synthesis feed; (j) cooling the product comprising ammonia by a heat removal Q7 to remove ammonia from the product comprising ammonia and provide a recycle gas stream comprising nitrogen and hydrogen; (k) compressing the gas stream comprising nitrogen and hydrogen via a recycle compressor; and/or (1) purging via a purge gas system, wherein further cooling is effected by a heat removal Q8, wherein, relative to a conventional method of producing ammonia, more of the net energy required by the method or in (a), (b), (c), (d), (e), (f), (g), (h), (i), (j), (k), (l), or a combination thereof (e.g., net thermal energy required (e.g., Q1 + Q4 + Q6 - Q2 - Q3 - Q5 - Q7 - Q8) and/or the net energy needed for mechanical work) is provided by a non-carbon based energy source, a renewable energy source, and/or electricity.

Also disclosed herein is a method of producing ammonia, the method comprising: (a) subjecting a feed comprising a carbon containing material selected from natural gas, methane, propane, butane, LPG, naphtha, coal, petroleum coke, or combinations thereof to reforming in a reformer of a synthesis gas generation section to produce a reformer product comprising synthesis gas containing hydrogen and carbon monoxide, wherein a reforming temperature is maintained by a heat input Q1; (b) cooling the reformer product to produce a cooled reformer product by effecting a heat removal Q2; (c) shifting the reformer product to produce a shifted synthesis gas; (d) cooling the shifted synthesis gas by effecting a heat removal Q3; (e) purifying the cooled, shifted synthesis gas by: removing carbon dioxide from the cooled, shifted synthesis gas; heating by a heat input Q4 to produce a heated carbon-dioxide reduced gas; methanating the heated carbon-dioxide reduced gas to produce a methanator product; and cooling and condensing water from the methanator product by removing a heat removal Q5 to provide a purified gas; (f) compressing the purified gas; (g) heating the compressed, purified gas by a heat input Q6 to provide a heated gas; (h) providing an ammonia synthesis feed comprising the heated gas, wherein the ammonia synthesis feed comprises hydrogen and nitrogen; (i) producing a product comprising ammonia from the ammonia synthesis feed; (j) cooling the product comprising ammonia by a heat removal Q7 to remove ammonia from the product comprising ammonia and provide a recycle gas stream comprising nitrogen and hydrogen; (k) compressing the gas stream comprising nitrogen and hydrogen; and/or (1) purging via a purge gas system, wherein purging is effected by a heat removal Q8, wherein a majority of the net thermal and/or mechanical energy required by the method or one or more of (a)-(1) is provided by a non-carbon based energy source, a renewable energy source, and/or electricity.

Further disclosed herein is a method of producing ammonia, the method comprising: (a) reacting (e.g., via processes such as steam reforming, partial oxidation and of gasification), a carbon containing material such as natural gas, methane, propane, butane, LPG, naphtha, coal or petroleum coke to produce a synthesis gas comprising carbon monoxide and hydrogen; (b) shifting the synthesis gas to produce a shifted product comprising increased amount of hydrogen; (c) purifying the shifted product to produce a purified gas comprising a smaller amount of non-hydrogen components; and (d) synthesizing ammonia from the purified gas and optionally additional nitrogen to provide an ammonia product, wherein a majority or greater than or equal to about 40, 50, 60, 70, 80, or 90% of the net energy needed in (a), (b), (c), (d), or a combination thereof is provided by a non-carbon based energy source, a renewable energy source, electricity, or a combination thereof.

Also disclosed herein is a method of producing ammonia, the method comprising: introducing a feed comprising a carbon containing material such as natural gas, methane, propane, butane, LPG, naphtha, coal or petroleum coke to a synthesis gas generation section such as steam reforming or partial oxidation to produce a synthesis gas product comprising hydrogen and carbon monoxide, where the energy required for the synthesis gas generation section is supplied by a heat input Q1; cooling the synthesis gas product to produce a cooled synthesis gas by effecting a heat removal Q2; shifting the cooled synthesis gas to produce a shifted synthesis gas product; cooling the shifted synthesis gas product by effecting a heat removal Q3 to produce a cooled, shifted synthesis gas; purifying the cooled, shifted synthesis gas by removing carbon dioxide from the cooled, shifted synthesis gas; heating by a heat input Q4 to produce a heated carbon-dioxide reduced gas; methanating the heated carbon-dioxide reduced gas to produce a methanator product; and cooling and condensing water from the methanator product by removing a heat removal Q5 to provide a purified gas; compressing the purified gas; heating the compressed, purified gas by a heat input Q6 to provide a heated gas; providing an ammonia synthesis feed comprising the heated gas and optionally added nitrogen; producing a product comprising ammonia from the ammonia synthesis feed; cooling the product comprising ammonia by a heat removal Q7 to remove ammonia from the product comprising ammonia and provide a recycle gas stream comprising nitrogen and hydrogen; compressing the gas stream comprising nitrogen and hydrogen via a recycle compressor; and/or purging via a purge gas system, wherein further cooling is effected by a heat removal Q8, wherein a majority or substantially all of the heat removed in cooling and water condensation (e.g., Q2, Q3, Q5, Q7, and/or Q8) is used only for heating other streams (e.g., Q1, Q4, and/or Q7) and/or is converted to electricity.

### DETAILED DESCRIPTION

It should be understood at the outset that although an illustrative implementation of one or more embodiments are provided below, the disclosed compositions, methods, and/or products may be implemented using any number of techniques, whether currently known or not yet in existence. The disclosure should in no way be limited to the illustrative implementations, drawings, and techniques illustrated hereinbelow, including the exemplary designs and implementations illustrated and described herein, but may be modified within the scope of the appended claims along with their full scope of equivalents.

While the following terms are believed to be well understood by one of ordinary skill in the art, the following definitions are set forth to facilitate explanation of the presently disclosed subject matter. Unless defined otherwise, all technical and scientific terms used herein have the same meaning as commonly understood to one of ordinary skill in the art to which the presently disclosed subject matter belongs.

As utilized herein, an 'intermittent energy source' or 'IES' is any source of energy that is not continuously available for conversion into electricity and outside direct control because the used energy cannot be stored or is economically undesirable. The availability of the intermittent energy source may be predictable or non-predictable. A renewable intermittent energy source is an intermittent energy source that is also a source of renewable energy, as defined hereinbelow. 'Intermittent electricity' refers to electricity produced from an IES.

As utilized herein 'renewable energy' and 'non-fossil based energy (ENF)' includes energy derived from a sustainable energy source that is replaced rapidly by a natural, ongoing process, and nuclear energy. Accordingly, the terms 'renewable energy' and 'non-fossil based energy (ENF)' refer to energy derived from a non-fossil fuel based energy source (e.g., energy not produced via the combustion of a fossil fuel such as coal or natural gas), while 'non-renewable' or 'fossil based energy (EF)' is energy derived from a fossil fuel-based energy source (e.g., energy produced via the combustion of a fossil fuel). Fossil fuels are natural fuels, such as coal or gas, formed in the geological past from the remains of living organisms. Accordingly, as utilized herein, 'renewable' and 'non-fossil based energy (ENF)' include, without limitation, wind, solar power, water flow/movement, or biomass, that is not depleted when used, as opposed to 'non-renewable' energy from a source, such as fossil fuels, that is depleted when used. Renewable energy thus excludes fossil fuel based energy (EF) and includes biofuels.

As utilized herein, non-carbon based energy (ENC) is energy from a non-carbon based energy source (e.g., energy not produced via the combustion of a carbon-based fuel such as a hydrocarbon), while carbon based energy (EC) is energy from a carbon-based energy source (e.g., energy produced via the combustion of a carbon-based fuel such as a hydrocarbon). Nuclear energy is considered herein a renewable, non-fossil (ENF) based energy and a non-carbon based energy (ENC). Carbon-based energy (EC) can thus be renewable (e.g., non-fossil fuel based) or non-renewable (e.g., fossil fuel-based). For example, various carbon-based biofuels are herein considered renewable, carbon-based energy sources.

As utilized herein 'renewable electricity' indicates electricity produced from a renewable energy source, while 'non-renewable electricity' is electricity produced from a non-renewable energy source. As utilized herein 'non-carbon based electricity' indicates electricity produced from a non-carbon based energy source, while 'carbon-based electricity' is electricity produced from a carbon-based energy source.

For example, in embodiments, renewable electricity and/or heat throughout the herein-disclosed ammonia synthesis plant can be provided by the combustion of renewable hydrocarbons that come from renewable (e.g., biological) sources. For example, renewable electricity can, in embodiments, be produced via the combustion of an ENF/EC energy source comprising methane produced in a digester fed with agricultural wastes. Likewise, in embodiments, an ENF/EC energy source comprising synthesis gas produced using short cycle carbon waste materials can be utilized as a fuel (e.g., combusted to produce renewable electricity and/or heat). Desirably, the carbon dioxide generated by such combustion is recaptured (e.g., by the growth of a new crop).

As utilized 'externally' combusting a fuel refers to combusting a fuel outside of a reactor, e.g., in a furnace. Combustion as a part of the primary reaction (e.g., combustion which takes place with reforming in autothermal reforming (ATR)) would not be considered 'externally' combusting. As utilized herein, a 'dedicated' fuel is a fuel or portion of a feed stream introduced solely to provide fuel value (e.g., combustion heat) and not be converted into product.

As utilized herein, heat transfer steam (SHT) indicates steam produced solely or primarily as an energy or heat transfer medium (e.g., steam not utilized as a diluent and/or reactant).

As utilized herein, 'net' heat input or removal refers to heat input or removal that results in primary energy consumption, e.g., heat input or removal not provided from another section or stream of the plant, e.g., not provided via heat exchange with another process stream. Similarly, 'net' energy refers to energy that results in primary energy consumption, e.g., energy not provided from another section or stream of the plant, e.g., thermal energy not provided via heat exchange with another process stream.

As utilized herein 'powering' indicates supplying with mechanical and/or electrical energy.

As utilized herein 'heating' indicates supplying with thermal energy. As utilized herein 'cooling' indicates the removal of thermal energy therefrom. As utilized herein, 'direct' heating or cooling refer to heating or cooling without the use of a heat transfer medium/fluid; 'indirect' heating or cooling refer to heating or cooling via a heat transfer medium/fluid.

As utilized herein 'most' or 'a majority' indicates more than 50% or more than half.

Although the majority of the above definitions are substantially as understood by those of skill in the art, one or more of the above definitions can be defined hereinabove in a manner differing from the meaning as ordinarily understood by those of skill in the art, due to the particular description herein of the presently disclosed subject matter.

The goal of a typical traditional chemical process is to convert feed A into product B, although often some byproducts (indicated as stream C) are also produced.

The unit operations used to effect this transformation require significant amounts of energy. Conventionally, this energy is primarily supplied by burning a fuel, often natural gas, to generate heat, denoted as ΔHc (e.g., heat of combustion). This results in the undesirable production and emission of carbon dioxide (CO₂). Additional energy may be supplied by the heat of reaction, ΔHr, if the reaction is exothermic; if the reaction is endothermic, an additional amount of energy equal to ΔHr will need to be added. The total energy balance may also be affected if some byproducts are burned to produce energy, indicated as ΔHbp. However, many chemical processes, even those involving exothermic reactions, are net energy consumers and thus require an external source of energy (typically provided by a hydrocarbon fuel(s)) to provide net process energy.

Electricity is usually only a small external input into most chemical production processes. Internal electrical requirements, such as for lighting or control, are usually so small as to be negligible, and in those few processes which require large amounts of electricity, for example, electrochemical reactors (e.g., the chlor-alkali process to make chlorine (C12) and sodium hydroxide (NaOH)), this electricity is commonly generated within the plant boundaries by the combustion of hydrocarbons, and, even when not generated within the plant boundaries, if the electricity is obtained by the combustion of hydrocarbons rather than renewably, such use of electricity is equivalent in terms of energy efficiency and CO₂ emissions to on-site production of the electricity via hydrocarbon combustion.

Within most chemical production processes, energy consumption can conveniently be divided into three main categories. In the first such broad category, referred to herein as first category C1, heat is supplied directly as thermal energy by the combustion of a fuel (e.g., natural gas/fossil fuels) in a furnace. (As utilized, here, 'directly' indicates the absence of an intermediate heat transfer medium, such as steam.) These furnaces are often operated at high temperature and require large heat fluxes. The energy efficiency of such furnaces is limited by the heat losses in the furnace flue gas. Even where these heat losses are minimized by the cooling of the flue gas to recover energy, for example to generate steam or provide process heating, the conversion of the chemical energy contained in the fuel to usable thermal energy generally does not exceed 85 to 90%, even with substantial investment and loss of design and operating flexibility.

The second broad category, referred to herein as second category C2, of energy consumption in chemical processes comprises the heating of various chemical streams, primarily either to raise the temperature thereof to a desired reaction temperature or to provide energy for separations, most commonly distillation. Although some of this heat can be obtained by exchange with other chemical streams, it is most typically provided either by steam generated directly by the combustion of hydrocarbon fuels (e.g., natural gas/fossil fuels) or by heat transfer from the flue gas from high-temperature furnaces (e.g., from category C1). Most modern chemical processes include a relatively complicated steam system (or other heat transfer fluid system which will generically be referred to herein for simplicity as a steam heat transfer system) to move energy from where it is in excess to where it is needed. This steam system may include multiple pressure levels of steam to provide heat at different temperatures, as well as a steam and condensate recovery system, and is subject to corrosion, fouling, and other operational difficulties, including water treatment and contaminated condensate disposal. The fraction of the energy contained in the steam that can be used to heat process streams is generally limited to 90 to 95% by practical constraints on heat transfer, steam condensation, and boiler water recycle. If the steam was generated by an on-purpose external boiler, at most 80 to 85% of the chemical energy contained in the fuel will be used as heat by the chemical process, since an additional 10 to 15% or more will be lost to flue gas as in first category C1.

The third major category, referred to herein as third category C3, of energy usage in chemical processes is energy utilized to perform mechanical work. This work is primarily utilized for pressurizing and moving fluids from one place to another, and is used to drive rotating equipment such as pumps, compressors, and fans. This third category C3 also includes refrigeration equipment, since it is primarily powered by compression. In most chemical facilities, the energy for this work is provided by steam, obtained either by heat transfer with hot process streams, by heat transfer with partially-cooled flue gas streams from a furnace (e.g., in the convection section) in category C1, or directly from the combustion of hydrocarbons (e.g., natural gas/fossil fuels) in an on-purpose external boiler. Because of limitations on the conversion of thermal energy to mechanical work, the energy efficiency of these uses relative to the contained chemical energy of the hydrocarbons used as fuel is low, typically only 25 to 40%.

It has been unexpectedly discovered that using electricity (e.g., renewable and/or non-renewable electricity) to replace energy obtained from a hydrocarbon fuel in a chemical process can improve the process by increasing overall energy efficiency, while decreasing carbon dioxide emissions. In some cases, using electricity (e.g., renewable and/or non-renewable electricity) to replace energy obtained from a hydrocarbon fuel in a chemical process can also improve reliability and operability, decrease emissions of, for example, NOx, SOx, CO, and/or volatile organic compounds, and/or decrease production costs (e.g., if low-cost electricity is available).

According to embodiments of this disclosure, heat conventionally supplied as thermal energy by the combustion of a fuel (e.g., natural gas/fossil fuels) in a furnace and/or other heating in first category C1 is replaced by electrical heating. Electrical heat, electrical heating, generating heat electrically, electrical heater apparatus, and the like refer to the conversion of electricity into thermal energy available to be applied to a fluid. Such electrical heating includes, without limitation, heating by impedance (e.g., where electricity flows through a conduit carrying the fluid to be heated), heating via ohmic heating, plasma, electric arc, radio frequency (RF), infrared (IR), UV, and/or microwaves, heating by passage over a resistively heated element, heating by radiation from an electrically-heated element, heating by induction (e.g., an oscillating magnetic field), heating by mechanical means (e.g. compression) driven by electricity, heating via heat pump, heating by passing a relatively hot inert gas or another medium over tubes containing a fluid to be heated, wherein the hot inert gas or the another medium is heated electrically, or heating by some combination of these or the like.

According to embodiments of this disclosure, the utilization of steam (or another heat transfer fluid) as in second category C2 is eliminated and/or any steam (or other fluid) utilized solely as an intermediate heat transfer medium is electrically produced or heated (e.g., via electrical heating of water).

According to embodiments of this disclosure, conventional rotating equipment (e.g., steam turbines) utilized in third category C3 is replaced with electrically driven apparatus. According to embodiments of this disclosure, heat removal in third category C3 is replaced by electrically-powered heat removal, e.g., cooling and/or refrigeration. Electrical cooling, electrical coolers, removing heat electrically, electrical cooling or refrigeration apparatus, and the like refer to the removal of thermal energy from a fluid. Such electrical cooling includes, without limitation, cooling by electrically powered apparatus. For example, and without limitation, electrical cooling can be provided by powering a refrigeration cycle with electricity, wherein a refrigerant is compressed by an electrically powered compressor. As another example, electrical cooling can be provided by powering a cooling fan that blows air, wherein the air cools a process fluid or element. In embodiments, electrical heating and cooling can be effected by any electrical source.

A process driven by renewable energy can, in embodiments, appear similar to a conventional chemical process. However, a portion, a majority, or, in some cases, substantially all of the energy input supplied by fuel can be replaced by renewable energy and/or by renewable electricity. Such replacement of fuel input by non-carbon based energy, renewable energy, and/or renewable electricity will allow for a significant decrease in CO₂ emissions, in embodiments. In embodiments, any available form of renewable energy can be employed. However, the gains may be greatest if renewable electricity is utilized. The renewable energy can be obtained from, for example and without limitation, solar power, wind power, or hydroelectric power. Other types of renewable energy can also be applied in chemical plants according to embodiments of this disclosure. For example, in embodiments, concentrated solar power, geothermal energy, and/or the use of direct solar heating can be used to provide thermal energy and to decrease CO₂ emissions.

One of the main advantages to supplying needed energy via (e.g., renewable) electricity can be that the energy efficiency of the process will increase. Table 1 shows the energy efficiency of unit operations exemplifying the three categories of energy use in a chemical plant described above as C1, C2, and C3. It can be seen from Table 1 that the efficiency of each of the three categories of energy consumption is greater when electrical power is used. The gain can be greatest when steam drives for rotating equipment are replaced, according to embodiments of this disclosure, with electrical motors (as in third category C3, discussed hereinabove), which can operate with as much as three times the energy efficiency of steam drives. These gains are only realized when the electricity is derived from non-carbon based renewable sources, since the generation of electricity from carbon-based fuel combustion is only 30 to 45% energy efficient. Energy efficiency gains when using renewable electricity for heating applications (as in first category C1 and second category C2, discussed hereinabove) are smaller, but still significant. The net result is that less total energy will be used if renewable energy is used in place of carbon-based fuels (e.g., natural gas or other hydrocarbons).

| **Table 1: Energy Efficiency of Unit Operations** | | |
|---|---|---|
| Use | Efficiency from Hydrocarbon Combustion | Efficiency from Electricity According to This Disclosure |
| C1: Direct Heating | up to 80 - 90% | 95+% |
| C2: Heating with Steam | up to 80 - 95% | 95+% |
| C3: Rotating Equipment | 25 - 40% | 90 - 95% |

According to this disclosure, non-carbon based energy, renewable energy, and/or electricity (e.g., from renewable and/or non-renewable sources) can be utilized rather than conventional energy sources in categories C1, C2, and/or C3 described hereinabove. In embodiments, electrification is utilized for a majority of or substantially all utilities. In embodiments, electrification is utilized for a majority of or substantially all unit operations. In embodiments, electrification is utilized for a majority of or substantially all utilities and unit operations. In embodiments, electrification is utilized for a majority of or substantially all process applications, engines, cooling and/or heating (e.g., electrically driven heat pumps, refrigeration, electrical heating), radiation, storage systems, or a combination thereof.

In embodiments, the non-carbon based and/or renewable energy source comprises wind, solar, geothermal, hydroelectric, nuclear, tide, wave, ocean thermal gradient power, pressure-retarded osmosis, or a combination thereof. In embodiments, the non-carbon based energy source comprises hydrogen. In embodiments, electricity for electrification as described herein is produced from such a renewable and/or non-carbon based energy source. In embodiments, some or all of the electricity is from a non-renewable and/or carbon-based source, such as, without limitation, combustion of hydrocarbons (e.g., renewable or non-renewable hydrocarbons), coal, or hydrogen derived from hydrocarbons (e.g., renewable or non-renewable hydrocarbons).

The majority of the CO₂ emitted from most chemical plants is a result of fossil fuel combustion to provide energy for the plant. An additional benefit of using renewable energy in chemical synthesis as per embodiments of this disclosure is that the amount of greenhouse gases emitted will be significantly (e.g., by greater than or equal to at least 5, 10, 20, 30, 40, 50, 60, 70, 80, 90, or 100%) reduced relative to an equivalent conventional chemical synthesis plant or method in which hydrocarbons and/or fossil fuel(s) may be combusted. The burning of hydrocarbons (e.g., natural gas, methane) to generate energy results in the production of carbon dioxide (CO₂); this production can be reduced or avoided by the use of renewable energy according to embodiments of this disclosure. In embodiments of this disclosure, the amount of COz produced per ton of product produced is reduced to less than or equal to about 1.6, 1.5, 1.4, 1.3, 1.2, 1.1, 1.0, 0.75, 0.50, 0.30, 0.25, 0.20, 0.10, 0.05, or 0 tons CO₂ per ton chemical product (e.g., ammonia). Furthermore, in embodiments of this disclosure, the use of renewable energy frees up these hydrocarbons (e.g., natural gas, methane) typically burned for fuel for use as a chemical feedstock (e.g., to make ammonia), which is a higher value use.

The use of renewable electricity in the production of chemicals can also lead to operational advantages. For example, in embodiments, electric power can be utilized to provide a more accurate and tunable input of heat, for example to control the temperature profile along a reactor or to change the temperature of specific trays in a distillation column. In embodiments, the use of electric heating in a reaction section (e.g., in a pyrolysis reaction section) leads to better controlled decoking and/or faster decoking. Without limitation, other examples include the use of electric powered refrigeration units to increase the efficiency of separations, and the replacement of inefficient stand-by gas-fired boilers with quick-acting on-demand electrical heaters and steam generators and for other utility uses. The use of electricity may also allow for significant operational advantages during start-up or shut-down, or to respond to process variability. In general, electricity as an energy source can be applied in specific locations and in precise and tunable amounts with a rapid response to process changes, leading to a variety of advantages over the use of thermal/combustion energy.

The use of renewable electricity according to embodiments of this disclosure can also increase the energy efficiency of utilities that supply energy to more than one chemical plant (e.g., an ammonia synthesis plant and a nearby methanol synthesis plant or an ammonia synthesis plant and a nearby olefin synthesis plant). For example, if the compressors in an air separation unit that provides oxygen and nitrogen to several different production facilities are powered with renewable electricity, significant energy gains can be achieved relative to supplying this power with steam derived from the combustion of natural gas.

Energy recovery may be provided, in embodiments, via high temperature heat pumps or vapor recompression. The plant may further comprise heat and/or energy storage, for example, for use when an intermittent energy source (IES) is utilized. In embodiments, waste heat can be upgraded to usable temperature levels via electrically driven heat pumps. In other embodiments, energy can be recovered as electricity when process stream pressures are reduced by using a power-generating turbine instead of a control valve. In other embodiments, energy can be recovered as electricity using thermoelectric devices.

The use of renewable electricity to replace natural gas or other hydrocarbons as a source of energy, according to embodiments of this disclosure, can be done as part of a retrofit of an existing chemical process (e.g., an existing ammonia synthesis plant) or as an integral component of the design of a new chemical plant (e.g., a new ammonia synthesis plant). In a retrofit, opportunities for using renewable energy can depend on elements of the existing design, such as the steam system; in a retrofit, careful examination of the entire energy balance and steam system will be required, as electrifying individual pieces of equipment without regard to these considerations may result in energy inefficiencies. In embodiments, as seen in Table 1, the highest efficiency gains are achieved by replacing steam drives for rotating equipment (e.g., in third category C3) with electric motors. However, differing objectives may lead to different choices in partial electrification; in embodiments, in some instances greater CO2 reductions at the expense of smaller increases in energy efficiency may sometimes be realized by first replacing hydrocarbon-fired furnaces (e.g., in first category C1). In embodiments, if thermal energy and/or steam are obtained from more than one hydrocarbon source, the most advantageous operation can be achieved by eliminating the most expensive and/or polluting fuel sources first. How much renewable energy can be included and to what extent existing fuel consumption and carbon dioxide (CO2) emissions can be decreased can vary depending on the application, and will be within the skill of those of skill in the art upon reading this disclosure.

In embodiments, planning for the use of renewable energy in the design of a grass-roots chemical facility (e.g., a grass-roots ammonia synthesis plant) can allow for more significant opportunities for better energy efficiency and lower CO2 emissions. In embodiments, powering all rotating equipment (e.g., in third category C3) with electricity is utilized to realize large gains in energy efficiency. In embodiments, substantially all (or a majority, or greater than 40, 50, 60, 70, 80, or 90%) electric heating (e.g., in first category C1 and/or second category C2) is utilized, and the inefficiencies due to the loss of heat in flue gas are substantially reduced or even avoided. In embodiments, the use of steam generated via the combustion of a fossil fuel (e.g., in second category C2) can be minimized or avoided altogether. In embodiments, a change in catalyst and/or a modification of reactor operating conditions is utilized to allow for less heat generation in a reactor and/or the production of fewer byproducts that are burned. In embodiments, a plant (e.g., ammonia synthesis plant) design based on the use of renewable electricity allows for enhanced optimization of separations operations, since the relative costs of compression and refrigeration are changed via utilization of renewable electricity as per this disclosure. Such enhanced separations can, in embodiments, also allow for further capture of minor byproducts from vent streams, freeing these minor products up for further use as feedstocks or products. Furthermore, the use of low-cost electricity, according to embodiments of this disclosure, may allow for the introduction of novel technologies such as, without limitation, hybrid gas and electric heaters, variable speed compressor drives, distributed refrigeration, heat pumps, improved distillation columns, passive solar heating of fluids, precise control of reactor temperature profiles, new materials of construction, and quench or cooling using electrically refrigerated diluents. If the cost of electricity is sufficiently low, utilization of such electricity as taught herein may favor the introduction of new electrochemical processes. For new construction, it may be less capital intensive to drive processes electrically, due, for example, to the lack of a (e.g., plant-wide) steam distribution system.

According to embodiments of this disclosure, non-carbon based energy, renewable energy, and/or electricity (renewable, non-renewable, carbon-based, and/or non-carbon based electricity) can be used in the production of nearly every chemical, including but not limited to methanol, ammonia, olefins (e.g., ethylene, propylene), aromatics, glycols, and polymers. Non-carbon based energy, renewable energy, and/or electricity can also be used, in embodiments, in the preparation of feedstocks for chemicals and for fuels production, such as in methyl tert-butyl ether (MTBE) synthesis, cracking, isomerization, and reforming. In such embodiments, some (e.g., at least about 10, 20, 30, 40, or 50%), a majority (e.g., at least about 50, 60, 70, 80, 90, or 95%), or all (e.g., about 100%) of the heating throughout the plant/process or a section thereof can be provided by electrical heating and/or some (e.g., at least about 10, 20, 30, 40, or 50%), a majority (e.g., at least about 50, 60, 70, 80, 90, or 95%), or all (e.g., about 100%) of the cooling throughout the plant/process or a section thereof can be provided by electrical cooling as described hereinabove. Disclosed hereinbelow is the use of renewable energy, non-carbon based energy, and/or electricity in ammonia synthesis applications.

This disclosure describes an ammonia synthesis plant for producing ammonia configured such that a majority of the net energy required by one or more sections, units, groups of like units, or unit operations of the ammonia synthesis plant is provided by non-carbon based energy (E_{NC}) from a non-carbon based energy source (e.g., not produced via the combustion of a carbon-based fuel such as a hydrocarbon), from renewable energy (e.g., from non-fossil fuel derived energy (E_{NF})), and/or from electricity. The E_{NC} or E_{NF} source may, in embodiments, comprise, primarily comprise, consist essentially of, or consist of electricity. The E_{NC} or E_{NF} source may, in embodiments, comprise, primarily comprise, consist essentially of, or consist of renewable electricity. In embodiments a portion (e.g., greater than or equal to about 5, 10, 20, 30, 40, 50), a majority (e.g., greater than or equal to about 50, 60, 70, 80, 90, or 95%), or all (e.g., about 100%) of the net energy needed by the overall ammonia synthesis plant, a section of the plant (e.g., a feed pretreating section, a syngas generation section, generally known and also referred to herein at times as a reforming section, a shift conversion section, a hydrogen and nitrogen purification section (sometimes referred to herein simply as a 'hydrogen purification section' or simply a 'purification section'), and/or an ammonia synthesis and/or separation section (sometimes simply referred to as an 'ammonia synthesis section')), a unit or group of like units (e.g., compressors, power providing units, reboilers, heating units, cooling units, refrigerators, separators, distillation/fractionation columns, reformers, shift reactors) or unit operations (e.g., compressing, powering, reacting (e.g., reforming), separating, heating, cooling) of the plant, or a combination thereof is provided by electricity, renewable energy (e.g., non-fossil fuel derived energy (E_{NF})), and/or non-carbon based energy (E_{NC}). In embodiments, electricity is provided from a renewable energy source, such as, without limitation, wind (*e.g*., via wind turbines), solar (*e.g*., photovoltaic (PV) panels or solar thermal), hydroelectric, wave, geothermal, nuclear, tide, biomass combustion with associated capture of CO₂ in replacement crops, or a combination thereof. In embodiments a portion (e.g., greater than or equal to about 5, 10, 20, 30, 40, 50), a majority (e.g., greater than or equal to about 50, 60, 70, 80, 90, or 95%), or all (e.g., about 100%) of the electricity, renewable energy (e.g., non-fossil fuel derived energy (E_{NF}), or non-carbon based energy (E_{NC}) needed by the overall ammonia synthesis plant, a section of the plant (e.g., a feed pretreating section, a syngas generation section, a shift conversion section, a hydrogen and nitrogen purification section, and/or an ammonia synthesis section and/or ammonia separation section), a unit or a group of like units (e.g., compressors, power providing units, heating units, reboilers, cooling units, refrigerators, separators, distillation/fractionation columns, reactors, shift reactors) or unit operations (e.g., compressing, powering, reacting, separating, heating, cooling) of the ammonia synthesis plant, or a combination thereof, and conventionally provided in a similar ammonia synthesis plant via combustion of a fuel, a carbon-based fuel, and/or a fossil fuel and/or the use of steam (e.g., that was itself generated via the combustion of such a fuel) as an intermediate heat (and/or energy) transfer fluid, is provided without combusting a fuel, a carbon-based fuel, and/or a fossil fuel and/or without the use of steam generated by the combustion of such a fuel as an intermediate heat (and/or energy) transfer fluid. In embodiments, the net energy for the overall plant or one or more sections, units or groups of like units of the plant is provided by electricity from a renewable energy source. For example, in embodiments, heating is electrically provided via resistive heating or otherwise converting electrical energy into thermal energy and/or mechanical energy.

In embodiments, an ammonia synthesis plant of this disclosure is configured such that a majority (e.g., greater than 50, 60, 70, 80, or 90%) of the net energy needed for powering, heating, cooling, compressing, or a combination thereof utilized via the feed pretreating system, one or more syngas generators (e.g. steam reformers), a shift conversion system, a hydrogen purification system, an ammonia synthesis system, or a combination thereof, as described hereinbelow, is provided by electricity.

In embodiments, an ammonia synthesis plant according to embodiments of this disclosure is a large plant having a production capacity for ammonia of greater than or equal to about 100,000 tons per year, 500,000 tons per year, or 2,500,000 tons per year. At the larger sizes anticipated in this disclosure, the amount of energy provided by a non-carbon based energy source, a renewable energy source and/or electricity will be correspondingly large. In embodiments, a partially or completely electrified plant according to the methods of this disclosure will consume at least 25, 50, 100, 150, 200, 300, 400, or 500 MW of electricity.

Although a specific embodiment of an ammonia synthesis plant will be utilized to describe the electrification of an ammonia synthesis plant, as disclosed herein, it is to be understood that numerous arrangements of units and a variety of ammonia synthesis technologies can be electrified as per this disclosure, as will be obvious to those of skill in the art upon reading the description herein.

An ammonia synthesis plant may be considered to include one or more of the following process sections for converting a feed stream 5 comprising a carbon-containing material (e.g. natural gas, naphtha or coal) and optionally 6 comprising a nitrogen containing material (typically air) into an ammonia product stream 55 (and optionally one or more byproduct streams 41): a feed pretreating section 10, a reforming or syngas generation section 20, a shift conversion section 30, a hydrogen purification section 40, an ammonia synthesis section 50, or a combination thereof. Such sections will be described briefly in the next few paragraphs, and in more detail hereinbelow.

A feed pretreating section 10 of an ammonia synthesis plant may be operable to prepare (e.g., remove undesirable components (e.g., sulfur) from, adjust temperature and/or pressure of a feed) a carbon-containing feed 5, most commonly natural gas, for syngas generation, providing a pretreated feed 15. In applications an ammonia synthesis plant of this disclosure does not comprise a feed pretreating section. A syngas generation section composed of a steam reforming section 20 is operable to carry out syngas generation by the steam reforming of the feed (e.g., feed 5 or pretreated feed 15) to produce a syngas 25 comprising carbon monoxide (CO) and hydrogen (H₂). In embodiments, air 6 can be introduced into an autothermal reformer of syngas generation section 20. Combustion of the oxygen in this air provides some of the energy needed to heat these reactors and supply the heat of reaction; the nitrogen in the air is carried through the process for conversion into ammonia. A shift conversion or 'shifting' section 30 is operable to subject the syngas 25 to water gas shifting to provide additional hydrogen via the water gas shift (WGS) reaction of Equation (1):

H₂O + CO → H₂ + CO₂, (1)

and provide shifted reformer product 35. A hydrogen and nitrogen purification section 40 is operable to produce an ammonia synthesis feed stream (also referred to herein as a purified reformer product) 45 comprising purified hydrogen and nitrogen. An ammonia synthesis section 50 is operable to produce ammonia from the ammonia synthesis feed 45 and thus provide an ammonia product 55. In embodiments, substantially pure nitrogen is introduced just prior to introduction of the ammonia synthesis feed into ammonia synthesis section 50/150. It is to be understood that, in such embodiments, the gas purified in hydrogen and nitrogen purification section 40/140 does not comprise nitrogen.

Energy (E) input to or within the ammonia synthesis plant or one or more sections or groups of units or unit operations thereof (that may conventionally be provided via a carbon based energy (E_{C}) 2A from a carbon based energy source, a fossil fuel derived energy (E_{F}) 3A from a fossil fuel-based energy source, or via the use of steam (e.g., steam generated for this purpose using energy derived from a carbon or fossil fuel based energy source) solely or primarily as a heat or energy transfer medium (S_{HT}) 1), may be partially or completely replaced by energy from a non-carbon based energy (E_{NC}) 2B from a non-carbon based energy source, renewable/non-fossil based energy (E_{NF}) 3B from a renewable energy source, and/or electricity (e.g., electricity and/or renewable electricity). The carbon based energy (E_{C}) 2A, the fossil fuel derived energy (E_{F}) 3A, or both can be partially or completely replaced by electricity. The electricity may be derived from a non-carbon based fuel, a renewable fuel, a renewable energy source, or a combination thereof, in embodiments. A benefit derived via the herein disclosed system and method may be a reduction in the greenhouse gas (GHG) emissions 4 from the ammonia synthesis plant or process. In embodiments, energy efficiency is increased by the elimination of flue gas, since the loss of heat contained in the flue gas to the atmosphere is eliminated. The elimination or reduction of the steam system may also result in lower capital and operating costs.

According to this disclosure, when cooling process streams, as much heat as possible should be used to heat other process streams. However, below a certain temperature, further heat transfer is no longer effective or useful, and blowers, cooling water, and/or refrigeration (which require an energy input for heat removal) are utilized. In such embodiments, for example, heat exchangers, refrigeration units, or a combination thereof for altering the temperature of process streams may be powered electrically. In embodiments, steam is not utilized solely as an intermediate heat and/or energy transfer stream, and the plant or section(s) thereof do not comprise an elaborate steam system such as conventionally employed for energy transfer. In embodiments, steam is used as a heat transfer fluid and is not used to do mechanical work, for example to drive a pump or compressor. In embodiments, heating is provided via resistive heating. In embodiments, heating is provided via inductive heating.

Although not intending to be limited by the examples provided herein, a description of some of the ways an ammonia synthesis plant can be electrified according to embodiments of this disclosure will now be provided. The steps, sections, groups of units or unit operations described may be present or operated in any suitable order, one or more of the steps, sections, units, or unit operations may be absent, duplicated, replaced by a different step, section, unit or unit operation, and additional steps, sections, units, or unit operations not described herein may be employed, in various embodiments. Additionally, although a step (e.g., heating B2) is noted as being in a particular section (e.g., in hydrogen and nitrogen purification section 40/140), the step could also be considered a part of another section (e.g., ammonia synthesis section 50/150).

As noted hereinabove, in embodiments, an ammonia synthesis plant comprises a feed pretreating section 10/110. Such a feed pretreating section 10/110 can be operable to remove one or more components such as, without limitation, sulfur, from a carbon-containing feed to provide a pretreated feed 15/115. If the carbon-containing feed comprises sulfur, sulfur compounds may be removed because sulfur deactivates the catalyst(s) used in subsequent steps. Sulfur removal can utilize catalytic hydrogenation to convert sulfur compounds in the feedstocks to gaseous hydrogen sulfide via the Equation (2):

H₂ + RSH → RH + H₂S (gas) (2).

The gaseous hydrogen sulfide can then be adsorbed and removed by passing it through beds of, for example, zinc oxide, where it is converted to solid zinc sulfide via the Equation (3):

H₂S + ZnO → ZnS + H₂O (3).

Feed purification apparatus utilized in feed pretreating section 10 can be any suitable contaminant/poison removal apparatus known to those of skill in the art. In embodiments, the pretreating section 10/110 is operable to provide the feed at a desired operating temperature and/or pressure for the downstream syngas generation or reforming section 20/120.

According to embodiments of this disclosure, feed pretreating can be effected with a reduced usage of non-carbon based energy, the use of renewable energy, and/or the use of electricity (e.g., electricity from renewable and/or non-renewable source(s)). For example: compressors of the pretreating section can be operated with electric motors rather than gas or steam driven turbines, heat input or removal needed in feed pretreating can be electrically provided, or a combination thereof. In embodiments, pressure reduction is utilized to generate electricity. In embodiments, feed pretreatment catalysts are regenerated using electrical heating and/or electrically-heated gas.

An ammonia synthesis plant according to this disclosure comprises a syngas generation section operable to reform the carbon-containing feed to produce hydrogen and carbon monoxide. The syngas generation section can include steam methane reforming, autothermal reforming, or both. In embodiments, a syngas generation section 120 comprises a steam methane reformer or bed, an autothermal reforming reactor or bed, and an adiabatic steam methane reforming reactor or bed.

Syngas generation section 20/120 can be operable to effect catalytic steam reforming of the (e.g., sulfur-free) methane feed to form hydrogen plus carbon monoxide via the reversible and equilibrium limited Equation (4):

CH₄ + H₂O ⇆ CO + 3H₂ (4).

The syngas generation section 120 may comprise steam methane reforming at 120A, whereby methane in natural gas feed 105 and steam in line 111 are combined and then fed to a steam methane reforming furnace where the methane is partially converted to carbon monoxide and hydrogen via Equation (4). In embodiments, the steam methane reforming reaction occurs over a broad temperature range from about 350°C to 850°C and at a pressure of from about 25 bar to 50 bar. The steam methane reforming reaction is endothermic and the heat of reaction is conventionally provided by burning methane at the furnace burners to provide heat input, indicated as Q1. As described further hereinbelow, according to embodiments of this disclosure, the heat input Q1 is provided via a renewable energy source, a non-carbon based energy source, and/or electricity. The renewable energy source can comprise electricity from a renewable energy source (such as wind or solar energy).

At autothermal reforming 120B, air 106 is added (e.g., via compressor or compression section C1) to the partially converted stream indicated at 121 and the oxygen in the air combusts with methane to generate carbon oxides, water, and heat. The exit temperature of the autothermal reformer at 120B can be about 1000°C, although some hotter and cooler zones may exist in the reactor. The addition of air in this step may provide for the introduction of nitrogen. If autothermal reforming is done such that less than the necessary amount of nitrogen is supplied in this step (e.g., if purified oxygen is added in place of air) or if an autothermal reformer is not present, nitrogen will need to be added during a subsequent step of the process; for example, nitrogen obtained from an air separation unit (ASU) could be introduced into dry gas stream 144, in embodiments. Nitrogen from the air introduced at 106 may remain in the stream and becomes a raw material for the ammonia synthesis section 150 of the process. Impurities such as argon that are introduced with the air in the autothermal reformer also carry through the process and can be removed, in embodiments, by a purge.

A final step of syngas generation section 120 may be an optional adiabatic steam methane reforming bed 120C, for which heat from the combustion provides the heat of reaction. The autothermal reforming product indicated at 122 is subjected to adiabatic steam methane reforming, as indicated at 120C.

Conventionally, a fuel (e.g., natural gas, methane, purge gas from the ammonia synthesis section) is burned to provide heat Q1 needed to attain a desired reforming temperature. In embodiments of this disclosure, a desired steam reforming temperature is attained without burning a fuel. In embodiments of this disclosure, a desired steam reforming temperature is attained without burning a carbon-based fuel. Desirably, no natural gas or methane is burned as a fuel, as such natural gas or methane conventionally burned as a fuel can then be utilized as a feed to produce additional ammonia product according to embodiments of this disclosure.

In embodiments, steam reforming can be effected with a reduced usage of non-carbon based energy, the use of renewable energy, and/or the use of electricity (e.g., electricity from renewable and/or non-renewable source(s)). For example: compressors of the reforming section (such as compressor C1) can be operated with an electric motor, an electricity-driven turbine, and/or a turbine driven by electrically-produced steam rather than via a gas or steam driven turbine or a turbine driven by steam produced via the combustion of a fuel; the heat input Q1 required to attain and maintain a desired reforming temperature and provide the endothermic heat of reaction (in a steam methane reformer 120A and/or an adiabatic steam methane reformer 120C) can be electrically provided; or a combination thereof. In embodiments, the steam reformer(s) are heated with resistive or inductive heating. In embodiments, the steam reformer(s) are heated by means of radiative panels that are heated electrically (e.g., via resistive heating, inductive heating, ohmic heating, or the like.)

In embodiments, steam for the reforming reaction can be generated with electrical heating. In embodiments, the steam is generated using an electrode boiler or a resistive immersion heater. In embodiments, preheating of the feed is effected by the injection of steam that is at a higher temperature than the feed stream to be heated. In embodiments, this steam is superheated electrically. The air 106 introduced to the autothermal reformer can be electrically heated. In embodiments, the steam methane reforming reactor at 120A is electrically heated to give a controlled temperature profile such that the extent of reaction is increased. In embodiments, this controlled profile more closely approximates isothermal operation. In embodiments, the feed to the autothermal reformer comprises oxygen, rather than air, and nitrogen is introduced later in the process, e.g., between steps C2 and B2. In embodiments, this oxygen and nitrogen are obtained from an air separation unit (ASU). In embodiments, the air separation unit is operated using renewable electricity. In embodiments the syngas generation section 20/120 does not contain an autothermal reformer, and nitrogen is introduced as a pure nitrogen stream produced in an electrically powered air separation unit. In embodiments, the syngas exiting a primary reformer may be heated (e.g., via the use of electrical energy/heating) to a temperature at which it can be further converted in an adiabatic steam reforming reactor. Nitrogen (e.g. from an electrically powered ASU) may be introduced either before or after the adiabatic reformer. In embodiments in which the nitrogen is introduced before the adiabatic steam reformer, this nitrogen stream may be preheated (e.g., electrically) so as to provide some or all of the additional heat required to raise the temperature of the syngas inlet to the adiabatic reformer.

As noted above, an ammonia synthesis plant of this disclosure can comprise a shift conversion or 'shifting' section 30/130. The shift conversion section 30/130 can comprise a high temperature shift reactor, a low temperature shift reactor, a first shift reactor, a final shift reactor, or a combination thereof. The shift conversion section can include cooling upstream and/or downstream of the high temperature shift reactor, the low temperature shift reactor, or both, wherein the heat removed can be transferred either directly or indirectly to another process stream.

After the syngas generation is complete, the syngas product stream 125 is subjected to water gas shifting in the shift conversion section 30/130 to produce additional hydrogen via the water gas shift (WGS) reaction of Equation (1) above. The shifting can be effected via any suitable methods known in the art, in embodiments, so long as the energy for the ammonia synthesis plant I/II or the shifting section 30/130 is provided as detailed herein. For example, shifting can comprise high temperature shift, low temperature shift, or both. The syngas product in syngas product stream 125 may be partially cooled at first cooling step or unit(s) A1 (with heat removal indicated by Q2) to produce a cooled reformer product indicated by stream 131. Cooled syngas stream 131 is introduced into a high temperature shift reactor(s) at 130A where additional hydrogen (H₂) is formed by shifting water and carbon monoxide to produce carbon dioxide and additional hydrogen via the water gas shift (WGS) reaction of Equation (1) above to provide a high temperature shifted stream 132. High temperature shift may be performed at a temperature of about 300 to 450°C and a pressure of about 25 to 50 bar in embodiments.

Shifting section 130 can further comprise cooling of the high temperature shifted stream 132 in a second cooling step or unit(s) A2 (with heat removal indicated by Q3), whereby the stream is cooled to provide cooled, high temperature shifted stream 133.

Shifting section 130 may further comprise further completion of the shift reaction in a low temperature shift reactor indicated at step or unit(s) 130B. The cooled, high temperature shifted stream 133 can be introduced into a low temperature shift reactor at 130B. In embodiments, the low temperature shift step at 130B can be performed at a temperature of about 200 to 300°C and/or a pressure of about 25 to 50 bar to provide low temperature shifted stream 134. Without limitation, an ammonia synthesis plant of this disclosure may comprise both high temperature shift 130A and low temperature shift 130B because low temperature is needed to drive the reaction to near completion, but the reaction proceeds faster at high temperature.

A third cooling step A3 (with heat removal indicated by Q4) can be employed to reduce the temperature of the low temperature shifted reformer product 134, and provide a cooled, shifted reformer product stream 135. In embodiments, the cooled, shifted reformer product stream 135 has a temperature suitable for feeding to the hydrogen and nitrogen purification section 40/140. Such a temperature may be between ambient temperature and 100°C.

According to embodiments of this disclosure, shifting can be effected with a reduced usage of non-carbon based energy, the use of renewable energy, and/or the use of electricity (e.g., electricity from renewable and/or non-renewable source(s)). For example: the heat removal (such as heat removal Q2 for cooling A1 prior to shifting, the heat removal Q3 for cooling A2 between a high temperature shift 130A and a low temperature shift 130B, the heat removal Q4 for cooling A3 after a low temperature shift 130B) required to provide a desired shift temperature can be electrically provided, or a combination thereof. In embodiments, heat removal is matched with heat inputs so that recovered thermal energy is used for heating other process streams. In embodiments, Q2, Q3, and Q4 are used to supply thermal energy to Q1 Q5, and/or Q7, and the remaining energy is supplied electrically. In embodiments, reactors (for one or more steps, sometimes including reforming) can have a temperature profile imposed by electric heating. In embodiments, thermoelectric devices and/or heat pumps are used to move energy from Q2, Q3, and/or Q4 to other places where the energy can be utilized.

As noted above, an ammonia synthesis plant of this disclosure can comprise a hydrogen and nitrogen purification section 40/140. The hydrogen and nitrogen purification section 40/140 can be operable to remove one or more components (e.g., carbon dioxide, water, carbon monoxide, or a combination thereof) from the shifted syngas product in stream 35/135. The hydrogen and nitrogen purification section 40/140 can comprise a carbon dioxide removal apparatus, a methanation apparatus, a water condensing/cooling apparatus, heating apparatus, compression apparatus, or a combination thereof, as described further hereinbelow.

As noted above, the hydrogen and nitrogen purification section 40/140 can comprise a carbon dioxide removal apparatus. As noted above, in embodiments, after shifting, the shifted reformer product stream is cooled and much of the steam present in this stream is condensed. The shifted reformer product stream 135 may be fed to a carbon dioxide removal apparatus 140A to produce a carbon dioxide-reduced stream 141. In embodiments, the carbon dioxide removal apparatus utilizes a suitable solvent (typically an amine or bicarbonate salt solution) to absorb carbon dioxide. The absorbed carbon dioxide is released and the solvent regenerated for recycle to the absorber in a CO₂ stripper of the carbon dioxide removal apparatus. In embodiments, the regeneration of the solvent is performed with electric heating (e.g., utilizing an electric reboiler). In embodiments, this electric heating is effected with an immersion heater. In embodiments, the CO₂ can be stripped from the solvent by the injection of low-pressure steam, wherein this steam is produced via heat exchange with another process stream and/or by electrical heating of water. In embodiments, the solvent is an amine solution.

As noted above, the hydrogen and nitrogen purification section 40/140 can comprise a methanation apparatus. Due to the nature of the (typically multi-promoted magnetite) catalyst used in the ammonia synthesis reaction of ammonia synthesis section 50/150 described below, only very low levels of oxygen-containing (especially CO, CO₂ and H₂O) compounds can be tolerated in the ammonia synthesis feed gas stream(s) or purified reformer product in stream 45/145 (*e.g.,* in the hydrogen and nitrogen mixture). In embodiments, after carbon dioxide removal 140A, the carbon dioxide-reduced stream 141 may be heated, as mentioned further hereinbelow and indicated at B1 (with heat input indicated at Q5) prior to methanation 140B in a methanator. Methanation is operable to remove residual carbon monoxide and carbon dioxide via reaction with hydrogen to form methane and water according to Equations (5) and (6):

CO + 3H₂ → CH₄ + H₂O (5)

CO₂ + 4H₂ → CH₄ +2H₂O (6).

An alternative to the use of a methanator is to convert the trace levels of CO into CO₂ by the addition of a stoichiometric quantity of oxygen from an oxygen containing stream and passing this mixed stream over a bed of a selective CO oxidation catalyst (e.g., highly dispersed gold). In this way CO can be reacted with O₂ according to Equation (7):

CO + ½ O₂ → CO₂ (7).

When this alternative CO removal process is employed, it should be carried out prior to the CO₂ removal step. An advantage of this alternative process is that, in contrast to methanation, no hydrogen is consumed. Suitable oxygen containing streams include air, oxygen-enriched air produced in an air separation plant and pure oxygen produced in an air separation plant (which may be electrically powered, in embodiments).

As noted above, the hydrogen and nitrogen purification section 40/140 can comprise a water removal or "water condensing" apparatus. The methanation product stream 143 stream may be cooled and the water 147 is condensed out (with heat removal indicated at Q6) at water condensing A4, to produce a dry gas stream 144. In embodiments this water removal step may be carried out using desiccant or molecular sieve beds (e.g. 3A molecular sieve) through which the cooled methanator product stream is passed to generate a dry gas stream until such time as the molecular sieve bed is saturated, whereupon said stream is switched to an alternate molecular sieve bed and the now saturated molecular sieve bed is dried by passing a heated stream of dry gas (e.g., a regeneration gas) through it. Said stream of dry gas may comprise nitrogen or fuel gas and may be heated to the required temperature (e.g., to approximately 220°C) using electrical energy, in embodiments.

As noted above, the hydrogen and nitrogen purification section 40/140 can comprise compression C2. For example, the dry gas stream 144 may be introduced to the ammonia synthesis section 150 via compression C2 with one or more compressors. Compression C2 can raise the pressure to about 60 to 250 bar, in embodiments.

As noted above, the hydrogen and nitrogen purification section 40/140 can comprise heating apparatus. Heating can be provided upstream of methanation; downstream of compression and upstream of ammonia synthesis section 150; or both. For example, after carbon dioxide removal 140A, the carbon dioxide-reduced stream 141 may be heated, as mentioned further hereinbelow and indicated at B1 (with heat input indicated at Q5) prior to methanation 140B in a methanator. The compressed dry gas in purified reformer product stream 145 can be heated B2 (with heat input indicated at Q7) after compression C2 and prior to ammonia synthesis in ammonia synthesis section 150. The purified reformer product in compressed, dry gas stream 145 can be heated, for example, to a temperature in the range of from about 100°C to about 350°C (in stream 146) prior to ammonia synthesis.

According to embodiments of this disclosure, hydrogen and nitrogen purification can be effected with a reduced usage of non-carbon based energy, the use of renewable energy, and/or the use of electricity (e.g., electricity from renewable and/or non-renewable source(s)). For example: carbon dioxide removal 140A can be electrified by electrifying solvent regeneration. Methanation 140B can be electrified, for example, by electrically heating gas 141 at B1 and/or by electrically heating the methanation reactor at 140B. Hydrogen and nitrogen drying (e.g., at A4) may be electrified, for example, by electrically heating the regeneration gas stream. In embodiments, the heat input Q5 required to attain a desired methanation temperature by heating B1 can be electrically provided; the heat removal Q6 required to effect water condensing A4 can be electrically provided; the compressing utilized at C2 can be effected via an electric motor, an electricity-driven turbine, and/or a turbine driven by electrically produced steam rather than a gas-driven turbine and/or a steam turbine driven by steam produced from combustion of a fuel; the heat input Q7 needed to reach a desired ammonia synthesis temperature at heating B2 can be electrically provided; or a combination thereof. In embodiments, heat removal is matched with heat inputs so that recovered thermal energy is used to heat other process streams. In embodiments, the energy recovered in Q6 is applied to energy input Q5, and the balance is supplied electrically. In embodiments, hydrogen obtained from another source is added to the process in the hydrogen purification section 40/140. In embodiments, this hydrogen is obtained from a process that uses renewable electricity. In embodiments, some or all of the nitrogen needed for ammonia synthesis is added near the end of the hydrogen purification section 40/140 (for example via nitrogen line 266. In embodiments, hydrogen or nitrogen are compressed and/or heated electrically before being added into the hydrogen purification section 40/140.

In embodiments, enough hydrogen is available from outside sources (e.g., from a steam cracker, from refinery sources, and/or from water electrolysis) that the reforming and shift conversion sections are no longer needed. Nitrogen of the appropriate purity from other sources (e.g., from an air separation unit) is then added to this hydrogen prior to compression C2. Heating B2, ammonia synthesis 150A, cooling A5/A6 and separation then proceed as described below. In embodiments, all hydrogen is produced using a non-carbon based energy source, a renewable energy source, electricity, and/or renewable electricity. In embodiments, the nitrogen is obtained from an air separation unit powered mostly or entirely by electricity. In embodiments, the compressor of compression C2, recycle compressor C3, and/or the compressor(s) used for refrigeration A6 are driven electrically. In embodiments, a majority, 60%, 70%, 80%, 90%, or all external energy for heating B2, ammonia synthesis 150A, cooling A5/A6 and separation is supplied using a non-carbon based energy source, a renewable energy source, electricity, and/or renewable electricity.

In embodiments, the hydrogen and nitrogen stream from which carbon dioxide has been removed (e.g., stream 144), may be further purified to reduce or eliminate contamination with methane, for example using a pressure swing adsorption (PSA) system, generating a purified hydrogen and nitrogen stream low in methane and a separate methane stream. In embodiments, said separate methane stream may be recycled to the syngas generation section 20/120 whereas the low in methane purified hydrogen and nitrogen stream may be fed to the ammonia synthesis loop. This approach can, in embodiments, reduce the need for loop purging and improve the overall efficiency of the process.

In embodiments, a PSA type system can be used to remove methane, CO and CO₂ from the hydrogen and nitrogen stream ahead of the ammonia synthesis loop of ammonia synthesis section 50/150, or optionally ahead of a methanator of 140B. In such embodiments, the hydrogen and nitrogen stream can be fed to the synthesis loop whereas the mixed carbon oxides and methane stream can be further processed to produce relatively pure CO₂ and methane streams. In embodiments, the relatively pure CO₂ and methane streams can be fed to a urea plant and recycled to the synthesis gas generation sections of the ammonia plant, respectively.

As noted above, an ammonia synthesis plant of this disclosure can comprise an ammonia synthesis section 50/150. The ammonia synthesis section 50/150 can comprise one or more ammonia synthesis reactors or catalyst beds for carrying out the ammonia synthesis 150A; cooling apparatus A5/A6 operable to remove heat after each of the one or more ammonia synthesis reactors or catalyst beds; compression apparatus (also referred to herein as a recycle compressor) C3 operable to recycle nitrogen and hydrogen to the one or more ammonia synthesis reactors; a purge gas system 150B operable to purge gas (e.g., methane, argon, nitrogen, and/or CO₂) from the ammonia synthesis section 50/150; or a combination thereof, as described further hereinbelow.

In the ammonia synthesis section 50/150, nitrogen (N₂) and hydrogen (H₂) are reacted to make ammonia (NH₃). In embodiments, to produce the desired ammonia end-product, the purified hydrogen is catalytically reacted with nitrogen to form ammonia according to equilibrium limited Equation (8):

3H₂+N₂ ⇆ 2NH₃. (8).

The nitrogen for the ammonia synthesis reaction may already in the purified syngas generation section product stream 45/145, or can be added to the purified hydrogen stream in alternative embodiments. As noted above, due to the nature of the (often multi-promoted magnetite) catalyst used in the ammonia synthesis reaction, only very low levels of oxygen-containing (especially CO, CO₂ and H₂O) compounds can be tolerated in the synthesis gas (e.g., the hydrogen and nitrogen mixture). In the embodiments just mentioned wherein nitrogen is added after hydrogen purification 40/140, relatively pure nitrogen can be obtained by air separation. Additional oxygen removal may be required, in embodiments. One advantage of supplying pure nitrogen produced using an air separation process is that argon and other impurities can also be removed from the nitrogen and, hence, the hydrogen and nitrogen stream feed into the ammonia synthesis section 50/150 can comprise a reduced amount or substantially no such inert materials. This can reduce the need for purging of the synthesis loop typically required to prevent the build-up of non-reactive gases, and increase the overall efficiency of the process.

As noted above, the ammonia synthesis section 50/150 can comprise one or more ammonia synthesis reactor(s) and/or catalyst bed(s). The ammonia synthesis reaction can be carried out in one or more ammonia synthesis reactors or catalyst beds of ammonia synthesis section 50/150. The ammonia synthesis reaction of Equation (8) is exothermic and conversion is equilibrium limited. In embodiments, the ammonia synthesis reaction is carried out at about 200 to 500°C. In embodiments, the reaction is carried out over a series of (e.g., three) catalyst beds/reactors and heat is removed in between the beds (heat removal from the ammonia synthesis section 50/150 between and/or after the ammonia synthesis reactor(s)/catalyst bed(s)). Without wishing to be limited by theory, the heat removal can be utilized to limit the temperature rise and thus increase the extent of reaction.

As noted above, in embodiments, the ammonia synthesis section 50/150 comprises cooling apparatus operable to remove heat after each of the one or more ammonia synthesis reactors or catalyst beds and to enable separation of ammonia from the effluent gas stream obtained from the ammonia synthesis reactor(s). This cooling may occur in one or more steps. In embodiments, the post-ammonia-synthesis cooling comprises two steps: a first step comprising thermal cooling (where heat can be extracted) and a second step, which requires an energy input (primarily refrigeration). In a first post-ammonia-synthesis cooling, as indicated at A5 (with energy removal indicated at Q8), the cooling is operated to extract heat and/or energy from ammonia in line 151 that can be used elsewhere in the process (e.g., via heat exchange). In a second post-ammonia-synthesis cooling, as indicated at A6, energy input (e.g., work in driving a compressor) is required to further cool the product stream 151' from the first cooling A5 such that ammonia is condensed and removed via ammonia product stream 155. In this second cooling, the product stream can be cooled and then chilled to a range of about -10 to about 5°C at a high pressure (e.g. close to ammonia synthesis loop pressure) such that the ammonia is condensed and removed as a liquid. The remaining vapor, containing a majority of the unreacted hydrogen and nitrogen and a minority of the ammonia, is recycled via line 152 and recycle compressor C3 to the ammonia synthesis loop (e.g., via recycle stream 153), whereas the liquid stream (e.g., ammonia stream 155), containing the majority of the ammonia and a minority of the unconverted hydrogen and nitrogen, can be further chilled and depressurized for further purification thereof, if desired, and the ammonia product stored, sold, or etc.

As noted above, in embodiments, the ammonia synthesis section 50/150 comprises compression apparatus (also referred to herein as a recycle compressor) C3 operable to recycle nitrogen and hydrogen to the one or more ammonia synthesis reactors. The unreacted nitrogen and hydrogen may be compressed via recycle compressor C3, and recycled back to ammonia synthesis 150A via recycle stream 153. In embodiments, the compression C2 of the dried gas stream 144 and the compression C3 of recycle stream 153 may be combined in a single compressor of one or more stages.

As noted above, in embodiments, the ammonia synthesis section 50/150 comprises a purge gas system operable to purge gas (e.g., methane, nitrogen (N₂), hydrogen (H₂), argon (Ar) and/or impurities) from the ammonia synthesis section 50/150. In embodiments, to handle build-up of residual methane and inerts in the recycle gas in recycle stream 153, methane and inerts are purged from the recycle gas via a purge gas system 150B. Purge gas in line 154 may enter purge gas system 150B, and be removed from the ammonia synthesis plant via purge line 105'. The methane purge may be introduced into feed pretreating section 10/110 and/or syngas generation section 20/120 as a component of the reformer feed. Purge gas system 150B can involve heat removal, as indicated at Q9. In embodiments this purge gas may be processed, for example using a PSA, to separate it into two or more different streams comprising specific compounds or groups of compounds. In embodiments, methane and/or inert gases (e.g., Ar) are separated from the purge gas, such that the methane may be introduced as a feed to the syngas generation section 20/120 whilst some or the majority of the inert gases (e.g. Ar) present in the purge gas stream may be excluded from the process. In embodiments this purge gas may be processed, for example using a PSA, to separate a stream of purified hydrogen. In embodiments, this hydrogen stream may be recycled to the ammonia synthesis reactors, combusted to produce hot steam for steam methane reforming, exported as a valuable byproduct, and/or used to generate electricity. In embodiments, the separated hydrogen may be stored when electricity is readily available and used when electricity is not readily available and/or is not available at a desirable price. In embodiments, nitrogen separated from the purge gas is recycled (e.g., added to dry gas stream 144) for conversion to ammonia.

According to embodiments of this disclosure, ammonia synthesis 150 can be effected with a reduced usage of non-carbon based energy, the use of renewable energy, and/or the use of electricity (e.g., electricity from renewable and/or non-renewable source(s)). In embodiments, the heat removal Q8 required to attain a desired ammonia synthesis temperature within or downstream of one or more ammonia synthesis reactors (e.g., via cooling A5) is transferred to other streams via heat exchange, or this energy is otherwise utilized by conversion to electricity; the compressing utilized at recycle compressor C3 can be effected via an electric motor, an electricity-driven turbine, and/or a turbine driven by electrically produced steam rather than via a gas-driven turbine and/or a turbine driven by steam produced via combustion of a fuel; the heat removal Q9 needed by purge gas system 150B can be electrically provided; or a combination thereof. In embodiments, the cooling/refrigeration system for obtaining product ammonia (A6) is driven such that energy input is provided by electricity. In embodiments, the higher efficiency of electrically-driven compressors utilized at C2 and C3 allow for a higher than normal pressure in the ammonia synthesis reactor at 150A to be achieved economically and results in a higher per-pass yield of ammonia. In embodiments, this higher pressure allows for the reactor temperature to be lowered and results in a higher per-pass yield of ammonia. In embodiments, the higher efficiency of the electrically-driven compressors in the refrigeration system at A6 allows for economical separation of ammonia at a lower temperature, enabling a more complete separation. In embodiments, a combination of higher pressure, lower temperature, and/or higher yield allow ammonia to be condensed against cooling water rather than a colder refrigerant at A6.

In embodiments, a majority, greater than 20, 30, 40, 50, 60, 70, 80, or 90%, or substantially all of the net heat input or removal (Q1, Q2, Q3, Q4, Q5, Q6, Q7, Q8, and/or Q9) needed within the ammonia synthesis plant is provided from a non-carbon based energy source, from a renewable energy source, such as renewable electricity, and/or from electricity (e.g., electricity from renewable and/or non-renewable source(s)).

In embodiments, a majority, greater than 20, 30, 40, 50, 60, 70, 80, or 90%, or substantially all of the energy needed for compression (*e.g*., at air compressor C1, dry gas stream compression C2, and/or recycle compressor C3) within the ammonia synthesis plant is provided from a non-carbon based energy source, from a renewable energy source, such as renewable electricity, and/or from electricity (e.g., electricity from renewable and/or non-renewable source(s)). For example, an electric motor, an electrically-driven turbine, and/or a turbine driven by steam produced electrically may be utilized to provide compression throughout the ammonia synthesis plant or one or more sections thereof. In embodiments, a majority, greater than 20, 30, 40, 50, 60, 70, 80, or 90%, or substantially all of the compressors are replaced by or utilize an electric motor, an electrically-driven turbine, and/or a turbine driven by steam produced electrically.

In embodiments, electricity is utilized to produce slightly colder (e.g., 2, 5, 10 or 15°C colder) cooling water than conventional. In embodiments, electricity is utilized to supply the energy needed for the refrigeration system.

In embodiments, electricity can be used to provide the motive force for fluids. For example, electricity can be used to power pumps to move and/or pressurize liquids, and/or to power air blowers and/or fans. In embodiments, a fraction, a majority, or all (e.g., 20, 30, 40, 50, 60, 70, 80, 90, or 100%) of the number of pumps utilized in the ammonia synthesis plant are electrified.

As noted above, when utilizing electricity from a renewable source that has a potentially or known intermittent supply (e.g., an intermittent energy source or IES), various steps can be taken to maintain operation of the ammonia synthesis plant, according to embodiments of this disclosure. Such handling of an IES can be as described in U.S. Provisional Patent Application Nos. _and_, entitled *Use of Intermittent Energy in the Production of Chemicals*, which are being filed concurrently herewith, the disclosure of each of which is hereby incorporated herein for purposes not contrary to this disclosure. For example, in embodiments, compressed hydrogen is stored for intermittency of electric supply. Alternatively or additionally, recovered hydrogen separated from the purge gas can be pressurized and stored when electricity is available and used to generate electricity using a fuel cell during times of low electric supply. Alternatively or additionally, one or more cryogenic liquids can be stored for intermittency of electric supply. Alternatively or additionally, heat can be stored for intermittency of electric supply.

In embodiments, when a methane steam reformer is utilized in syngas generation section 20/120, heat may be stored in the insulating material lining the internals of the reforming furnace, thereby increasing the heat storage capacity of the furnace such that temporary loses of electrical power to the heating elements therein would result in only a small drop in the temperature of the reforming tubes which are heated largely through radiation from the surface of surrounding insulating material. Alternatively or additionally, batteries can be kept for intermittency of electric supply. Backup power for key components may be provided; non-renewable electricity may be utilized as a back-up for intermittent renewable electricity. For example, such backup power may be produced via apparatus driven by compressed gas or a flywheel. Alternatively or additionally, natural gas feed, hydrogen, or nitrogen can be stored for intermittency of electric supply. Alternatively or additionally, stored compressed gases can be used to generate electricity as they are depressurized. Alternatively or additionally, cooled ammonia product can be stored for use as a refrigerant for intermittency of electric supply.

Electrification of the ammonia synthesis plant of this disclosure can be provided via an electricity supply that can be high voltage or low voltage. The electric devices can be operable or operated on alternating (single or multiphase) or direct current.

In embodiments, steam generated by the combustion of fuels or produced solely for heat and/or energy transfer is not utilized in an ammonia synthesis system and method of this disclosure (e.g., in the pretreating section 10/110, the syngas generation/reforming section 20/120, the shift conversion section 30/130, the hydrogen and/or nitrogen purification section 40/140, and/or the product purification section 50/150). In this manner, an ammonia synthesis plant according to this disclosure can be operated, in embodiments, without an elaborate steam heat and/or energy transfer system (which may be conventionally utilized in an ammonia synthesis plant). In some applications, for example where steam is utilized within a reactor as a feed component and/or diluent, such steam may be produced via heat transfer with a process stream within the ammonia synthesis plant and/or may be produced electrically. In embodiments, steam generated via heat transfer with a process stream may be superheated using electricity. In embodiments, steam is not utilized throughout the ammonia synthesis plant as a commodity or utility. In embodiments, an ammonia synthesis plant of this disclosure is essentially steam-free, or utilizes substantially less steam (e.g., uses at least 10, 20, 30, 40, 50, 60, 70, 80, 90, or 100 volume percent (vol%) less steam) than a conventional plant for producing ammonia. For example, a conventional plant for producing ammonia may utilize steam production for reboilers of distillation columns of the feed pretreating section 10/110 and/or the hydrogen and/or nitrogen purification section 40/140, may utilize steam production to drive steam turbines for compressing process and/or recycle streams, or may utilize steam production to drive steam turbines for refrigeration. In embodiments, steam is not produced for these operations in an ammonia plant according to this disclosure, or substantially less steam is produced (e.g., at least 10, 20, 30, 40, 50, 60, 70, 80, 90, or 100 volume percent (vol%) less steam). In embodiments, steam is used as a heat transfer fluid, but is not used to do mechanical work (e.g., to drive a compressor or pump.) In embodiments, the steam generated for these operations is primarily (e.g., of the total steam utilized, the greatest percentage is electrically produced), mainly (e.g., greater than 50% of the steam is electrically produced) or substantially all electrically produced. In embodiments, the steam utilized as a reactant or diluent is primarily (e.g., of the total steam utilized, the greatest percentage is electrically produced), mainly (e.g., greater than 50% of the steam is electrically produced) or substantially all electrically produced.

In embodiments, in an ammonia synthesis plant or process of this disclosure, more energy is utilized directly 'as-is', for example, utilizing heat from a hot product effluent stream to heat a feed stream, rather than being transformed, e.g., via the generation of steam and the conversion of the thermal energy to mechanical energy via a steam turbine. According to embodiments of this disclosure, the use of energy directly can increase the energy efficiency of the ammonia synthesis plant, for example by reducing energy efficiency losses that occur when heat is converted to mechanical energy.

As energy consumption is a large fraction of the operating costs of a traditional ammonia synthesis plant, increasing energy efficiency (e.g., via electrification) as per this disclosure and/or utilizing natural gas conventionally burned to provide heat for syngas generation (e.g. by reforming) and/or burned for compression (e.g., burned to produce steam for a steam turbine or burned for a gas turbine) to produce additional ammonia may provide economic advantages over a conventional ammonia synthesis plant. Concomitantly, the reduction of the burning of fossil fuels (e.g., natural gas, methane) as a fuel enabled via this disclosure provides for reduced greenhouse gas (GHG) emissions relative to a conventional ammonia synthesis plant in which hydrocarbons are burned as fuel. In embodiments, GHG emissions resulting from the provision of energy for the process (e.g., carbon dioxide emissions) are reduced by at least 5, 10, 20, 30, 40, 50, 60, 70, 80, 90, or 100% relative to a conventional ammonia synthesis plant in which hydrocarbons are burned as fuel. In embodiments of this disclosure, the amount of CO₂ produced per ton of ammonia produced is reduced to less than 1.6, 1.5, 1.4, 1.3, 1.2, 1.1, or 1.0 tons CO₂ per ton ammonia. In embodiments, aspects of this disclosure can lead to an increase in carbon efficiency of a process, i.e. to a fraction of carbon consumed in the process that reappears as a useful product, and/or a reduced specific energy consumption (e.g., the energy utilized to synthesize a quantity of chemical product).

Conventionally, the energy required for unit operations in chemical processes is generally provided by the burning of fossil fuels, especially natural gas. Herein-disclosed are systems and methods by which this energy input can be reduced or replaced, in embodiments, with non-carbon based energy, renewable energy, such as renewable electricity, and/or by electricity from any source (e.g., renewable and/or non-renewable), such that energy efficiency is improved (e.g., energy losses are reduced). In embodiments, energy efficiency (e.g., reduced energy losses) is increased by a decrease in or elimination of the use of steam to do mechanical work. In embodiments, the energy efficiency of the process is increased such that the specific energy consumption (the total net energy input, including fuel and electricity, but not including any contribution of the heat of reaction, feed, or byproduct credits, to the process divided by the production rate) is less than 12, 11, 10, 9, 8, or 7 GJ/ton of ammonia produced, where the specific energy consumption is calculated using the higher heating value of the fuel. In embodiments, the total amount of methane and/or natural gas used as feed and fuel is less than 0.65, 0.60, 0.55, 0.50, 0.45, or 0.40 tons per ton of ammonia produced. In embodiments, the total amount of methane and/or natural gas used as fuel is less than 0.20, 0.15, 0.10, 0.05, or 0 tons per ton of ammonia produced. The herein-disclosed use of non-carbon based energy, renewable energy, and/or electricity in the production of chemicals, such as the production of ammonia via steam methane reforming, increases energy efficiency of and/or decreases and/or eliminates carbon dioxide emissions from and fossil fuel consumption within the ammonia synthesis process.

### EXAMPLES

The embodiments having been generally described, the following examples are given as particular embodiments of the disclosure and to demonstrate the practice and advantages thereof. It is understood that the examples are given by way of illustration and are not intended to limit the specification or the claims in any manner.

### Comparative Example 1: Conventional Ammonia Synthesis with Primary and Secondary (Autothermal) Reforming

A process simulation was performed to determine the heat and mass flows for a typical process III for the production of ammonia. The process simulation utilized in this Comparative Example 1 was made using Aspen Plus®. It does not represent a specific operating plant, but it is representative of a typical plant as described hereinbelow; the design parameters were taken from knowledge of specific plants, as well as literature information on typical process operations. Although variations will be obvious to one skilled in the art, this Comparative Example 1 represents a typical process that can be used as a basis for comparing the effects of electrification modifications according to embodiments of this disclosure.

Process III of Comparative Example 1 utilizes primary and secondary (autothermal) reforming (i.e., ATR) and is configured to produce 125 metric tons per hour of ammonia. If operated for a typical 8000 hours in a year, this would result in the production of one million tons of ammonia, although variations in downtime due to upsets and maintenance could increase or reduce this output. This size is typical of large ammonia plants being built today.

59 metric tons per hour (t/hr) of pure methane feed 205 are fed to the process; the pretreatment of this methane feed to remove sulfur and other harmful components was not included in the model. An amount of 194 t/hr water 211 is vaporized and mixed with the methane feed. The resulting feed 215 is further preheated and fed to primary reformer 220A at approximately 620°C and 690 psia, where CO, CO₂, and H₂ are produced. Energy Q1 is supplied to primary reformer 220A by a natural gas fired furnace, which supplies the heat of reaction and further heats the gases; the firing of this furnace also results in energy input Q2, which is transferred in the convection section to preheat the feed water/methane mixture 215, and energy loss Q5, which is the energy lost in the flue gas. The product 221 from primary reformer 220A is combined with 149 t/hr preheated air feed 206 and fed to secondary autothermal reformer 220B where further reaction occurs, producing more CO, CO₂, and H₂. The energy for secondary reformer 220B is supplied by the oxidation of methane, CO, and H₂ that occurs in the secondary reformer itself. The product 222 from secondary reformer 220B is cooled (e.g., at cooling A1) to approximately 320°C and passed through two water gas shift reactors 230, where additional H₂ and CO₂ are formed. The product stream 234 from the water gas shift reactors 230 is further cooled (e.g., at cooling A2/A3; as utilized herein, A2/A3 means 'A2 and/or A3') and then purified in CO₂ removal section 240A, where 154 t/hr CO₂ is removed by amine absorption. To release absorbed CO₂ and regenerate the amine solution, a significant amount of energy is required. Some of this energy is obtained by heat exchange with the cooling gas streams from the secondary reformer 220B and the water gas shift reactors 230, but additional energy Q3 must be supplied; this energy is obtained from auxiliary boiler 260 via the production and use of medium pressure steam 262 from boiler feed water (BFW) 261. The purified product stream 241 from CO₂ removal section 240A is heated to approximately 290°C and fed to methanation unit 240B, where the remaining CO (∼ 0.4 mol%) and CO₂ (∼0.1 mol%) are removed. The resulting gas stream 243 is cooled and dried at A4 and then the resulting stream 244 is combined with recycle gas 253 and compressed in synthesis loop compressor(s) C2/C3 (which can be a single compressor, in embodiments; as utilized herein, C2/C3 means 'C2 and/or C3') to 3095 psia; the energy W2 for this compression is supplied by high pressure steam 263 obtained from auxiliary boiler 260. The combined and compressed gas stream 245 is preheated to approximately 450°C and sent to a series of three ammonia synthesis reactors 250A in series with interstage cooling; per-pass conversion of nitrogen is 30%. The ammonia-containing product stream 251 is first cooled at A5, allowing for heat recovery for use in heating other process streams, then cooled again with air and cooling water, and finally cooled to -34°C using refrigeration at A6 so that 125 t/hr liquid ammonia product 255 may be recovered. The energy (e.g., to provide work W3) for refrigeration section at A6 is supplied by high pressure steam 263 obtained from auxiliary boiler 260. After ammonia recovery, a 17 t/hr purge 205' is taken from the remaining gases to allow for removal of impurities; the composition of this purge stream is approximately 12 weight % CH₄, 11 weight % H₂, 75 weight % N₂, and 2% weight % NH₃. The remainder of the gas stream 253 is then recycled back to synthesis loop compressor(s) C2/C3.

There are four major energy consumers in the conventional process III of this Comparative Example 1: (1) regeneration of the amine solution in CO₂ removal 240A, (2) power (e.g., to provide work W1, W2, W3) to drive the three large compressors via compressor turbines 265 including air compressor C1, synthesis loop compressor(s) C2/C3, and refrigeration compressor at A6, (3) heating to raise the temperature of the feed gases and provide the heat of reaction for the primary reformer 220A, and (4) preheating of the feed (e.g., at heating B2) before the first ammonia synthesis reactor of 250A. As is common, very little electricity is consumed, primarily for some smaller pumps. Some of the energy required for these operations can be obtained by heat exchange with streams that are being cooled (for example, much of the heat required to preheat the methanation reactor feed (e.g., at heating B1) can be obtained from heat removed when cooling at A4 the product gases 243 from the same reactor), but the rest must be supplied externally and is conventionally generated by burning fuel. In Comparative Example 1, external energy is supplied in two places: the primary reformer furnace of primary reformer 220A, and the auxiliary boiler 260. The primary reformer furnace consumes 7.3 t/hr of natural gas with a contained chemical energy (high-heating value, or HHV) of 111 MW. Auxiliary boiler 260 consumes 40.5 t/hr of natural gas with a contained chemical energy of 617 MW. In addition, although some of the reactions are endothermic (e.g., steam reforming), the net set of reactions for Comparative Example 1 is exothermic and generates roughly 70 MW of energy that can be used elsewhere. How to most efficiently allocate this energy to the various consumers of energy in the process with the highest efficiency is an engineering problem that can be addressed by one of skill in the art upon reading this disclosure via careful matching of temperatures, types of energy, and energy content. Energy can be transferred directly via heat exchange or it can be converted to steam that can either be used for heat exchange or to do mechanical work, such as to drive a compressor. In Comparative Example 1 a strategy was utilized that maximizes heat exchange between the various process streams; assuming that available heat can be moved efficiently from where it is available to where it is needed at a corresponding temperature. This represents a maximal heat integration strategy and minimizes external energy inputs, but other arrangements are possible, as will be obvious to one skilled in the art. The use of combustion to supply some of the external energy input needed for the process comes with a concomitant disadvantage - the stack or flue gas from these furnaces and boilers contains energy that cannot be usefully recovered because of its low temperature and difficulties in condensing water. For example, in the process of Comparative Example 1, this wasted energy amounts to 147 MW. Energy is also lost in several process steps where streams are cooled but the heat cannot be usefully recovered, for example in the final cooling of the product stream from ammonia synthesis reactor at 250A.

Table 2 shows energy use values for the process of Comparative Example 1. As seen in Table 2, an amount of 728 MW of energy is supplied through the combustion of natural gas in the reformer furnace of primary reformer 220A and the auxiliary boiler 260. An additional 70 MW is obtained as the net exothermic heat of reaction. The total net energy input to the process is 798 MW, although a large amount (> 400 MW) of energy is also transferred internally from the cooling of hot product streams to the heating of feed streams. Of the 111 MW consumed in the primary reformer furnace at 220A, the radiant section is used to provide 57 MW to further heat the gases and supply the heat of reaction; an additional 31 MW is transferred in the convection section to preheat the feed water/methane mixture 215. The remaining 23 MW is lost to the atmosphere in the flue gas. An amount of 617 MW is supplied to the auxiliary boiler 260, of which 68 MW is used to supply heat for CO₂ removal at 240A and 424 MW provides the power for the three large compressors, air compressor C1, synthesis loop compressor(s) C2/C3, and the refrigeration compressor at A6; 124 MW is lost to the atmosphere in the flue gas. In total, 147 MW, or 18% of the net external energy supplied, is lost in the flue gas from the reformer furnace at primary reformer 220A and auxiliary boiler 260.

As further seen in the data in Table 2, the total fuel gas consumption is 382,000 tons per year. The combustion of this fuel results in the atmospheric emissions 1.05 million tons of CO₂ annually. An additional 1.23 million tons of CO₂ are emitted from the process chemistry itself, giving total CO₂ emissions of 2.28 million tons per year. Specific energy consumption including the fuel as well as the heat of reaction is 22.9 GJ per ton of ammonia produced; specific energy consumption calculated only on the fuel inputs is 20.9 GJ per ton of ammonia produced. An amount of 40% of the total supplied energy (318 MW out of 798 MW) is lost due to inefficiencies in the conversion of steam to mechanical work; another 18% (147 MW) of the total supplied energy is lost to the atmosphere from the stack gas.

### Example 1: Primary and Secondary Reforming with Electric Compressors

Example 1 is a partial electrification process IV as per an embodiment of this disclosure of the ammonia synthesis process described in Comparative Example 1. In process IV, partial electrification is provided by electric compressors. An amount of 59 metric tons per hour (t/hr) of methane feed 205 is fed to the process; the pretreatment of this methane feed to remove sulfur and other harmful components was not included in the model. An amount of 194 t/hr water 211 is vaporized and mixed with the methane feed. The resulting feed 215 is further preheated and fed to primary reformer 220A at approximately 620°C and 690 psia, where CO, CO₂, and H₂ are produced. Energy Q1 is supplied to primary reformer 220A by a natural gas fired furnace, which supplies the heat of reaction and further heats the gases; the firing of this furnace also results in energy input Q2, which is transferred in the convection section to preheat the feed water/methane mixture 215, and energy loss Q5, which is the energy lost in the flue gas. The product 221 from primary reformer 220A is combined with 149 t/hr preheated air feed 206 and fed to secondary autothermal reformer 220B where further reaction occurs, producing more CO, CO₂, and H₂. The energy for secondary reformer 220B is supplied by the oxidation of methane, CO, and H₂ that occurs in the reformer. The product 222 from secondary reformer 220B is cooled (e.g., at cooling A1) to approximately 320°C and passed through two water gas shift reactors 230, where additional H₂ and CO₂ are formed. The product stream 234 from the water gas shift reactors 230 is further cooled (e.g., at cooling A2/A3) and then purified in CO₂ removal section 240A, where 154 t/hr CO₂ is removed by amine absorption. To release absorbed CO₂ and regenerate the amine solution, a significant amount of energy is required. Some of this energy is obtained by heat exchange with the cooling gas streams from the secondary reformer 220B and the water gas shift reactors 230, but additional energy Q3 must be supplied; this energy is obtained from auxiliary boiler 260 via the production and use of medium pressure steam 262 from BFW 261. The purified product stream from CO₂ removal section 240A is heated to approximately 290°C and fed to methanation unit 240B, where the remaining CO (∼ 0.4 mol%) and CO₂ (∼0.1 mol%) are removed. After further cooling and drying at A4 of methanation product 243, the resulting gas stream 244 is combined with recycle gas 253 and compressed in synthesis loop compressor(s) C2/C3 to 3095 psia; the energy (e.g., to provide work W2) for this compression is supplied by electricity. The combined and compressed gas stream 245 is preheated to approximately 450°C and sent to a series of three ammonia synthesis reactors 250A in series with interstage cooling; per-pass conversion of nitrogen is 30%. The ammonia-containing product stream 251 is first cooled at A5, allowing for heat recovery for use in heating other process streams, then cooled again with air and cooling water, and finally cooled to -34°C using refrigeration at A6 so that 125 t/hr liquid ammonia product 255 may be recovered. The energy (e.g., for work W3) for refrigeration section at A6 is supplied by renewable electricity. After ammonia recovery, a 17 t/hr purge 205' is taken from the remaining gases to allow for removal of impurities; the composition of this purge stream is approximately 12 weight % CH₄, 11 weight % H₂, 75 weight % N₂, and 2% weight % NH₃. The remainder of the gas stream 253 is then recycled back to synthesis loop compressor(s) C2/C3.

There are four major energy consumers in the partially electrified process IV of this Example 1: (1) regeneration of the amine solution in CO₂ removal 240A, (2) power (e.g., for work W1, W2, W3) to drive the three large compressors, air compressor C1, synthesis loop compressor(s) C2/C3, and refrigeration compressor at A6, (3) heating to raise the temperature of the feed gases (e.g., at 110) and provide the heat of reaction for the primary reformer 220A, and (4) preheating of the feed (e.g., at heating B2) before the first ammonia synthesis reactor at 250A. Smaller amounts of energy are used for a variety of other purposes. Some of the energy required for these operations can be obtained by heat exchange with streams that are being cooled (for example, much of the heat required to preheat the methanation reactor feed (e.g., at heating B1) can be obtained from heat removed when cooling at A4 the product gases 243 from the same reactor), but the rest must be supplied externally. In Example 1, external energy is supplied in three places: the primary reformer furnace at 220A, the auxiliary boiler 260, and renewable electricity used to power the three large compressors (e.g., C1, C2/C3, and a refrigeration compressor at A6). The primary reformer furnace at 220A consumes 7.3 t/hr of natural gas with a contained chemical energy (high-heating value, or HHV) of 111 MW. Auxiliary boiler 260 consumes 5.6 t/hr of natural gas with a contained chemical energy of 85 MW. An amount of 114 MW of electricity is supplied to three large compressors; at an efficiency of 93%, this performs the same work that required 424 MW of high pressure steam 263 in Comparative Example 1. In addition, although some of the reactions are endothermic (e.g., steam reforming), the net set of reactions for Example 1 is exothermic and generates roughly 70 MW of energy that can be used elsewhere. How to most efficiently allocate this energy to the various consumers of energy in the process with the highest efficiency is an engineering problem that can be addressed by one of skill in the art upon reading this disclosure via careful matching of temperatures, types of energy, and energy content. Energy can be transferred directly via heat exchange or it can be converted to steam that can either be used for heat exchange or to do mechanical work, such as to drive a compressor. In Example 1 a strategy was utilized that maximizes heat exchange between the various process streams; assuming that available heat can be moved efficiently from where it is available to where it is needed at a corresponding temperature. This represents a maximal heat integration strategy and minimizes external energy inputs, but other arrangements are possible, as will be obvious to one skilled in the art. The use of combustion to supply some of the external energy input needed for the process comes with a concomitant disadvantage - the stack or flue gas from these furnaces and boilers contains energy that cannot be usefully recovered because of its low temperature and difficulties in condensing water. In the process of Example 1, this wasted energy amounts to only 40 MW, a reduction of 73% over Comparative Example 1. Energy is also lost in several process steps where streams are cooled but the heat cannot be usefully recovered, for example in the final cooling of the product stream from ammonia synthesis reactor at 250A.

Table 2 shows energy use values for the process of Example 1. As seen in Table 2, an amount of 196 MW of energy is supplied through the combustion of natural gas in the reformer furnace of primary reformer 220A and the auxiliary boiler 260, a reduction of 73% over Comparative Example 1. An amount of 114 MW of renewable electricity is supplied, and an additional 70 MW is obtained as the net exothermic heat of reaction. The total net energy input to the process is 380 MW, although a large amount (> 400 MW) of energy is also transferred internally from the cooling of hot product streams to the heating of feed streams. Of the 111 MW consumed in the primary reformer furnace at 220A, the radiant section is used to provide 57 MW to further heat the gases and supply the heat of reaction; an additional 31 MW is transferred in the convection section to preheat the feed water/methane mixture 215. The remaining 23 MW is lost to the atmosphere in the flue gas. An amount of 85 MW is supplied to the auxiliary boiler 260, of which 68 MW is used to supply heat for CO₂ removal at 240A and 17 MW is lost to the atmosphere in the flue gas. In total, 40 MW, or 10.5% of the net external energy (e.g., energy conventionally provided via burning of a fuel) supplied, is lost in the flue gas from the reformer furnace at 220A and auxiliary boiler 260.

As further seen in the data in Table 2, total fuel gas consumption is 103,000 tons per year. The combustion of this fuel results in the atmospheric emissions 0.28 million tons of CO₂ annually. An additional 1.23 million tons of CO₂ are emitted from the process chemistry itself, giving total CO₂ emissions of 1.51 million tons per year, a decrease of 33% over Comparative Example 1. Specific energy consumption, including the fuel, electricity, and heat of reaction, is 10.9 GJ per ton of ammonia produced; specific energy consumption calculated only on the fuel and electricity inputs is 8.9 GJ per ton of ammonia produced. An amount of 10.5% of the total supplied energy is lost in the stack gas and none is lost due to inefficiencies in the conversion of steam to mechanical work, in contrast to Comparative Example 1 where 18% and 40%, respectively, of the energy was lost in these ways.

**Table 2: Results from Comparative Example 1 and Examples 1**

| | Comparative Example 1 | Example 1 |
|---|---|---|
| External energy inputs | (values in MW unless specified) | (values in MW unless specified) |
| Fuel to primary reformer furnace at 220A | 111 | 111 |
| Fuel to auxiliary boiler 260 | 617 | 85 |
| Exothermic net heat of reaction | 70 | 70 |
| Renewable electricity to compressors | 0 | 114 |
| Renewable electricity to reforming furnace at 220A | 0 | 0 |
| Renewable electricity to CO₂ removal system 240A | 0 | 0 |
| Total external | 798 | 380 |
| | | |
| Flue gas losses | 147 | 40 |
| Losses due to inefficiency in steam usage | 318 | 0 |
| Losses due to inefficiency in electric usage | 0 | 8 |
| | | |
| Total natural gas consumption | 854,000 t/yr | 575,000 t/yr |
| Natural gas consumption for fuel | 382,000 t/yr | 103,000 t/yr |
| Specific energy consumption, including heat of reaction | 22.9 GJ/t | 10.9 GJ/t |
| Specific energy consumption, not including heat of reaction | 20.9 GJ/t | 8.9 GJ/t |
| Total CO₂ emissions | 2,280,000 t/yr | 1,520,000 t/yr |
| CO₂ emissions from utilities | 1,050,000 t/yr | 283,000 t/yr |

## Claims

1. A method of producing ammonia, the method comprising:
(a) introducing a feed comprising a carbon containing material selected from natural gas, methane, propane, butane, LPG, naphtha, coal, petroleum coke, or combinations thereof to a synthesis gas generation section such as steam reforming or partial oxidation to produce a synthesis gas product comprising hydrogen and carbon monoxide, where the energy required for the synthesis gas generation section is supplied by a heat input Q1;
(b) cooling the reformer product to produce a cooled synthesis gas by effecting a heat removal Q2;
(c) shifting the cooled synthesis gas to produce a shifted synthesis gas product;
(d) cooling the shifted synthesis gas by effecting a heat removal Q3 to produce a cooled, shifted synthesis gas;
(e) purifying the cooled, shifted synthesis gas by:
removing carbon dioxide from the cooled, shifted synthesis gas;
heating by a heat input Q4 to produce a heated carbon-dioxide reduced gas;
methanating the heated carbon-dioxide reduced gas to produce a methanator product; and
cooling and condensing water from the methanator product by a heat
removal Q5 to provide a purified gas;
(f) compressing the purified gas;
(g) heating the compressed, purified gas by a heat input Q6 to provide a heated gas;
(h) providing an ammonia synthesis feed comprising the heated gas, wherein the ammonia synthesis feed comprises hydrogen and nitrogen, wherein the nitrogen is present in the synthesis gas or subsequently added thereto;
(i) producing a product comprising ammonia from the ammonia synthesis feed;
(j) cooling the product comprising ammonia by a heat removal Q7 to remove ammonia from the product comprising ammonia and provide a recycle gas stream comprising nitrogen and hydrogen;
(k) compressing the gas stream comprising nitrogen and hydrogen via a recycle compressor; and/or
(l) purging via a purge gas system, wherein further cooling is effected by a heat removal Q8,
wherein, relative to a conventional method of producing ammonia, more of the net energy required by the method or in (a), (b), (c), (d), (e), (f), (g), (h), (i), (j), (k), (l), or a combination thereof (e.g., net thermal energy required (e.g., Q1 + Q4 + Q6 - Q2 - Q3 - Q5 - Q7 - Q8) and/or the net energy needed for mechanical work) is provided by a non-carbon based energy source, a renewable energy source, and/or electricity.

2. The method of claim 1, wherein the non-carbon based energy source comprises electricity.

3. A method of producing ammonia, the method comprising:
(a) subjecting a feed comprising a carbon containing material selected from natural gas, methane, propane, butane, LPG, naphtha, coal, petroleum coke, or combinations thereof to reforming in a reformer of a synthesis gas generation section to produce a reformer product comprising synthesis gas containing hydrogen and carbon monoxide, wherein a reforming temperature is maintained by a heat input Q1;
(b) cooling the reformer product to produce a cooled reformer product by effecting a heat removal Q2;
(c) shifting the reformer product to produce a shifted synthesis gas;
(d) cooling the shifted synthesis gas by effecting a heat removal Q3;
(e) purifying the cooled, shifted synthesis gas by:
removing carbon dioxide from the cooled, shifted synthesis gas;
heating by a heat input Q4 to produce a heated carbon-dioxide reduced gas;
methanating the heated carbon-dioxide reduced gas to produce a methanator product; and
cooling and condensing water from the methanator product by removing a heat removal Q5 to provide a purified gas;
(f) compressing the purified gas;
(g) heating the compressed, purified gas by a heat input Q6 to provide a heated gas;
(h) providing an ammonia synthesis feed comprising the heated gas, wherein the ammonia synthesis feed comprises hydrogen and nitrogen;
(i) producing a product comprising ammonia from the ammonia synthesis feed;
(j) cooling the product comprising ammonia by a heat removal Q7 to remove ammonia from the product comprising ammonia and provide a recycle gas stream comprising nitrogen and hydrogen;
(k) compressing the gas stream comprising nitrogen and hydrogen; and/or
(l) purging via a purge gas system, wherein purging is effected by a heat removal Q8,
wherein a majority of the net thermal and/or mechanical energy required by the method or one or more of (a)-(l) is provided by a non-carbon based energy source, a renewable energy source, and/or electricity.

4. The method of claim 2 or 3, wherein the electricity is produced from a renewable energy source.

5. The method of claim 4, wherein the renewable energy source comprises wind, solar, geothermal, hydroelectric, nuclear, tide, wave, or a combination thereof.

6. The method of claim 2 or 3, wherein the energy required for the synthesis gas generation section is supplied without combusting a fuel or a carbon-based fuel.

7. The method of claim 6, wherein the non-carbon based energy source comprises or the electricity is produced via an intermittent energy source (IES), and further comprising maintaining the temperature of one or more reactors in the synthesis gas generation section without combusting a fuel or a carbon-based fuel when the IES is available, and maintaining the temperature of one or more reactors in the synthesis gas generation section via a stored supply of energy from the IES or by combusting a fuel or a carbon-based fuel when the IES is not available.

8. The method of claim 2 or 3, wherein the synthesis gas generation is carried out in one or more steam reformers and the necessary energy is supplied via inductive or resistive heating from electricity or renewable electricity and including associated convective, radiant or other heat transfer means.

9. The method of claim 2 or 3:
wherein, other than the optional production of steam for use in the synthesis gas generating section, steam is not utilized as a primary energy transfer medium; and/or
steam is not utilized for mechanical work.

10. The method of claim 2 or 3, wherein a majority, some, or all of the steam utilized in the synthesis gas generating section, one or more, a majority, or all steam turbines of the plant, or a combination thereof is produced electrically.

11. The method of claim 2 or 3, wherein removing heat does not comprise the production of steam for use for mechanical work.

12. The method of claim 2 or 3, wherein compressing the purified gas, compressing the gas stream comprising nitrogen and hydrogen , compressing air for introduction into the process, or a combination thereof comprises compressing with a compressor driven by electric motor, an electrically-driven turbine, or a turbine driven by steam produced electrically in at least one, most, or all compressors utilized.

13. The method of claim 2 or 3 further comprising utilizing a thermoelectric device to convert some of the heat removed at Q2, Q3, Q5, Q7, and/or Q8 to electricity.

14. The method of claim 2 or 3 further comprising utilizing electric heating to control a temperature profile of any or all of a number of reactors of the synthesis gas generation section, shifting reactors utilized for shifting, methanation reactors utilized for the methanating, and ammonia synthesis reactors utilized for producing the product comprising ammonia from the ammonia synthesis feed.

15. The method of claim 2 or 3, wherein at least one of a number of reactors of the synthesis gas generation section is operated to at least approximate isothermal operation.
